# EUROPEAN PATENT SPECIFICATION

(11) **EP 3 447 334 B1**
(45) Date of publication and mention of the grant of the patent: **22.09.2021**
(21) Application number: 18190128.1
(22) Date of filing: 22.08.2018
(51) Int. Cl.: F16H 19/06

(54) **HIGH SPEED LINEAR ACTUATOR PART PLACEMENT SYSTEM**
HOCHGESCHWINDIGKEITS-LINEARSTELLGLIED-BAUTEILPLATZIERUNGSSYSTEM
SYSTÈME DE PLACEMENT DE PIÈCES D'ACTIONNEUR LINÉAIRE À VITESSE ÉLEVÉE

(30) Priority: 23.08.2017 US 201762549183 P; 21.12.2017 US 201715849955
(43) Date of publication of application: 27.02.2019
(73) Proprietor: Tolomatic, Inc., Hamel, Minnesota 55340-9360 (US)
(72) Inventor: Rosengren, Gary W., Brooklyn Park, Minnesota 55443 (US); Grunerud, Wyatt A., Minnetonka, Minnesota 55305 (US); Sondergeld, Brian M., Oregon, Ohio 43616 (US)
(74) Representative: Patentanwaltskanzlei WILHELM & BECK

(56) References cited:
- WO-A1-2016/137918
- DE-A1-102015 104 097

## Description

### CROSS-REFERENCE TO RELATED APPLICATIONS

This application claims priority to U.S. Provisional Application No. 62/549,183, HIGH SPEED LINEAR ACTUATOR PART PLACEMENT SYSTEM, filed August 23, 2017.

### BACKGROUND

This application relates generally to linear actuators and in particular to high-speed linear actuator and thruster systems. More specifically, the application is directed to high-speed, rod-style linear actuators, suitable for use in parts handling, manufacturing, and other industrial processes.

Linear actuator and thruster systems include both rod-type actuators and rodless designs, utilizing a range of different pneumatic cylinders, electric motors and magnetically coupled drives to provide the desired load capacity and actuation speed. A variety of bearing styles are also known, which can be adopted to light, moderate and heavy loading applications, accordingly.

Rod-style actuator implementations include, but are not limited to, short-stroke devices for use in welding, machining, and other manufacturing processes. Pneumatic cylinder and screw-driven rod-type actuators can also be configured with guide rods and mounting blocks, for increased load weight and extension. Rodless (e.g., rail and carriage) systems can be provided in longer-stroke configurations, or where space savings is a concern.

Actuator weight and complexity are important design considerations, across a wide range of system configurations. Cost concerns are also relevant, and there are constant demands for improved actuator speed and precision automated control, which are not met by existing actuator system designs.

WO 2016/ 137918 A1 shows a part placement system in which a linear actuator system can determine any position of an output rod. DE 10 20015 104097 A1 discloses a further part placement system.

### SUMMARY

The object to be solved relates to placing parts for a precision automatic manufacturing process.

The object is met by a part placement system according to claim 1 and a method for placing parts according to claim 8. Preferred embodiments are disclosed in the dependent claims

An actuator and part placement system is adapted to position parts at one or more selected locations. Depending on application, the part placement system can includes a linear actuator with a probe or similar placement tool connected to or integrated onto the end of an output rod. The part placement system disposes parts with respect to one or more part receiving fixtures; e.g., by placing the parts onto a tapered weld pin or post adapted to receive a weld nut or similar mechanical element, or into a cavity or recess feature adapted to accept the part. The part can then be attached to the desired location on a sheet metal component or other workpiece, for example by resistance welding or other machine process.

The actuator can include a controller adapted to modulate the acceleration of the output rod and probe toward the positioning fixture, together with one or more parts, so that the acceleration is greater than the gravitational acceleration acting on the part, and the part remains on the probe. To dispense the part from the probe to the receiving element, the actuator can decelerate the rod or reduce the acceleration to a suitably low value (below the longitudinal component of the gravitational acceleration), so the part is released from the probe and engaged with the weld pin or other receiving fixture.

This application is also directed to a high-speed, belt-driven, rod-style linear actuator system, which is adapted for part placement. The actuator system can include a belt drive and piston member disposed within a housing, and configured to position the output rod for placing a part with respect to a workpiecet. For example, the output rod can be provided with a part placement tool or probe adapted to position a weld nut on a weld pin, for resistance welding to a sheet metal component.

A part placement system is provided comprising:
a linear actuator operably coupled to an output rod, the linear actuator adapted to drive the output rod between a first position and a second position;
a part placement tool comprising a probe on an end of the output rod, the probe adapted to engage the part at the first position of the output rod and to place the part with respect to a locating fixture at the second position of the output rod; and
a controller operably coupled with the linear actuator, the controller adapted for the linear actuator to modulate acceleration of the output rod between engagement of the part in the first position and placement of the part in the second position;
wherein the controller is configured to determine the second position of the output rod responsive to contacting the locating fixture with the probe.

In an embodiment, the linear actuator may comprise:
an actuator housing having a longitudinal axis;
a piston member disposed within the actuator housing along the longitudinal axis; and
a drive belt coupled to the piston member, the drive belt configured to drive the piston member in reciprocal motion along the longitudinal axis;
wherein the output rod has a first end coupled to the piston member and second end opposite the first end, the second end coupled to the probe for selective positioning outside the actuator housing, in response to the reciprocal motion of the piston member within the actuator housing.

In a further embodiment, an electric motor having a rotatable shaft operably connected to the drive belt is provided, wherein rotation of the shaft in first and second opposing directions drives the output rod in reciprocating motion from the first position toward the second position and from second position toward the first position, respectively.

In a further embodiment, the controller is adapted to regulate a motor current of the electric motor to accelerate the output rod from the first position to a transition region defined between the first position and the second position, and to change an acceleration of the output rod in the transition region for releasing the part from the probe with the output rod in the second position.

The controller is configured to determine the second position of the output rod based on a selected spacing from a probe stop position with the tip of the probe contacting the locating fixture.

In a further embodiment, the tip of the probe has the selected spacing from the locating fixture with the output rod in the second position, the spacing selected for releasing the part from the probe and engaging the part with the locating fixture.

The controller is configured to determine the probe stop position based on a change in a motor current provided to the linear actuator with the tip of the probe contacting the locating fixture, the controller further configured to adjust the second position responsive to a change in the probe stop position, wherein the change is responsive to change in geometry of the locating fixture.

In a further embodiment, the controller is configured to determine the probe stop position by iterative contact of the probe with the locating fixture, absent the part.

In a further embodiment the probe comprises a tapered tip portion adapted to engage an opening in the part with the output rod in the first position, and the locating fixture comprises a pin member adapted to engage the opening when the part is released from the probe with the output rod in the second position.

In a further embodiment, the system further comprises a magazine configured to provide a plurality of parts for sequential engagement of the parts with the probe and the locating fixture, respectively, in response to reciprocal motion of the output rod between the first and second positions.

Furthermore, a method for placing parts is provided, the method comprising:
positioning a probe with respect to a part, the probe disposed on an output rod of a linear actuator;
engaging the part with the probe, wherein the output rod has a first position;
placing the part, wherein the output rod has a second position with the probe selectively spaced from a locating fixture; and
modulating an acceleration of the output rod between the first position and the second position, wherein the part is released from the probe to engage with the locating fixture.

In a further embodiment, the method further comprising determining a probe stop position of the output rod with the probe contacting the locating fixture, wherein the second position of the output rod is selectively spaced from the probe stop position for engaging the part with the locating fixture.

In a further embodiment, the method further comprising determining the probe stop position of the output rod iteratively, absent the part engaged with the probe.

In a further embodiment, the method further comprising performing the method iteratively to place a number of parts with respect to the locating fixture, and further comprising modifying the second position of the output rod responsive to operating the linear actuator to iteratively contact the probe with the locating fixture, absent the parts.

In a further embodiment, the output rod has a first end coupled to a piston member and a second end coupled to the probe, the second end opposite the first end, and further comprising driving the piston member in reciprocal motion along a longitudinal axis of the linear actuator to place a plurality of parts on the locating fixture by sequentially moving the output rod between the first and second positions.

In a further embodiment, the method further comprising providing motor current to an electric motor operatively coupled to the piston member via a belt drive, wherein acceleration of the output rod is responsive to the motor current.

In a further embodiment, the method further comprising modifying the second position of the output rod responsive to changes in the motor current with the probe contacting the locating fixture, wherein the second position is responsive to wear on the locating fixture to maintain a selected spacing of the probe from the locating fixture for engaging the parts therewith.

In a further embodiment, the method further comprising accelerating the output rod from the first position to a transition region defined between the first position and the second position, and reducing the acceleration of the output rod from the transition region to the second position for releasing the part onto the locating fixture.

In a further embodiment, the part comprises a weld nut and the locating fixture comprises a weld pin for a welding electrode, and further comprising disposing the weld nut on the weld pin and welding the weld nut to a workpiece adjacent thereto.

In a further embodiment, the method further comprising driving the output rod to a probe stop position with the probe contacting the weld pin, wherein the second position of the output rod is responsive to the probe stop position to maintain a selected spacing between the probe and the weld pin for engaging the part therewith.

### BRIEF DESCRIPTION OF THE DRAWINGS

FIG. 1 is an isometric view of a high-speed, rod-style linear actuator system.
FIG. 2 is a sectional view of the actuator system, showing the drive belt and thrust rod configuration.
FIG. 3 is an alternate sectional view of the actuator system, showing the motor mount.
FIG. 4 is a side view of the actuator system, showing the output rod in an extended position.
FIG. 5 is a detail view of the actuator system, showing the coupling between the output rod, piston and drive belt.
FIG. 6 is a detail view showing the distal end of the actuator system, including the idler pulley, tensioner mechanism and output rod bearing configuration.
FIG. 7 is a detail view showing the proximal end of the actuator system, including the motor mount and drive pulley assembly.
FIG. 8 is an isometric view of a part placement system.
FIG. 9A is a schematic side view of an actuator for the part placement system, with the part placement tool or probe in a first (part engagement) position.
FIG. 9B is a schematic side view of the actuator, with the probe in a second (part placement) position.
FIG. 10A is a detail view of an output rod for an actuator, showing the probe in the part placement position.
FIG. 10B is a detail view of a part positioned on a locating fixture.
FIG. 10C is a side view of the part in FIG. 10B, positioned between a workpiece and a weld electrode.
FIG. 11 is a schematic side view of a part loader, output rod and probe.
FIG. 12 is a block diagram illustrating a method for part placement.

### DETAILED DESCRIPTION

This disclosure relates to linear actuators and part placement systems that include actuator devices. Suitable part placement systems can be configured with an actuator rod adapted to position parts with respect to a weld electrode or locating fixture; e.g., for attachment to a selected location on a workpiece. In some embodiments, the part placement system includes a probe or similar part placement tool connected to or integrated onto the end of the output rod, and configured for cyclical engagement and placement of such parts.

The part placement system can be adapted to dispense parts onto one or weld pins for resistance spot welding, projection welding, and other machine processes. For example, the actuator may accelerate the output rod and probe together with one or more parts toward the weld pin or part-receiving fixture, so that the acceleration of the part is greater than the gravitational acceleration acting along the rod direction, maintaining the part on the end of the output rod. To release the part from the probe to the fixture, the actuator can decelerate the output rod or reduce its acceleration to a suitably low value, below the longitudinal component of the gravitational acceleration, so that the part continues to move along the rod axis and off the end of the probe to engage the locating fixture. In practice the output rod can decelerate to a momentary stop for placing and releasing the part, and then change direction to engage another part and repeat the placement cycle.

Suitable implementations include belt-driven linear actuator systems. Some of these embodiments relate to U.S. Patent Application No. 15/552,855, HIGH SPEED ROD-STYLE LINEAR ACTUATOR, filed August 23, 2017.

More generally, the system can position and dispense a number of suitable part types and components, of different sizes and shapes. For example, the system may dispense generally round, hollow parts, such as nuts or other resistance spot welding components. In some embodiments, the weld pin may include a tapered top projection configured to receive the nut or other hollow part, and a probe or similar part placement tool can be operably connected to the actuator to carry the part. A controller can be configured to operate the actuator to position the probe near a weld pin or other placement fixture, in a manner that facilitates sliding movement of the part relative to the probe to release the part and position the part in engagement with the weld pin or other fixture.

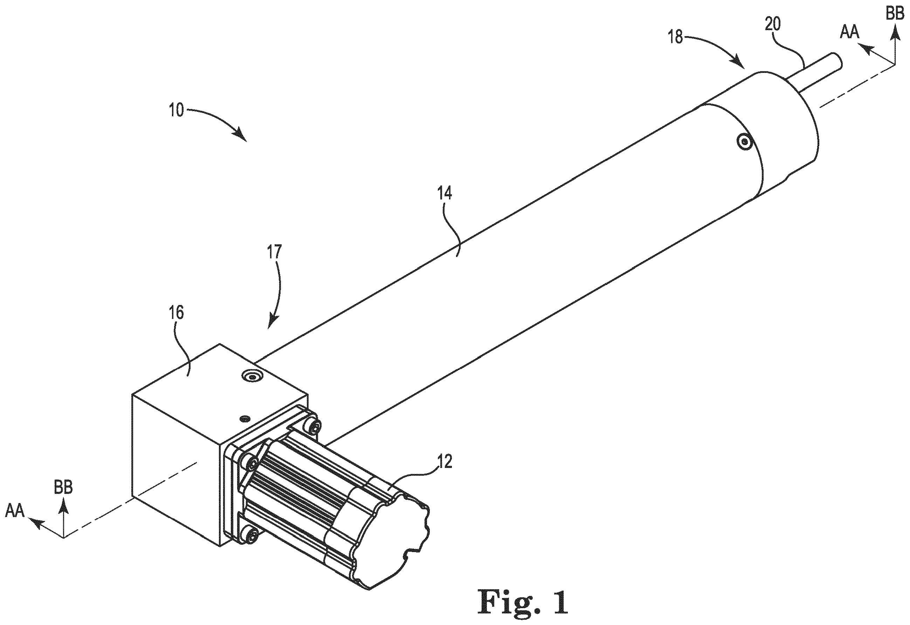

FIG. 1 is an isometric view of a high-speed, rod-style linear actuator or thruster system 10. In this particular configuration, actuator or thruster system 10 is driven by an electric motor 12, such as a stepper motor or servomotor, which is coupled to actuator housing 14 via motor mount 16.

Actuator housing 14 extends from motor mount 16 at proximal end 17 to distal end 18, axially or longitudinally opposite proximal end 17. The external part of thrust rod or output rod 20 extends outward from distal end 18 of actuator housing 14, and can be provided with a tooling interface for positioning a part or workpiece, as described herein.

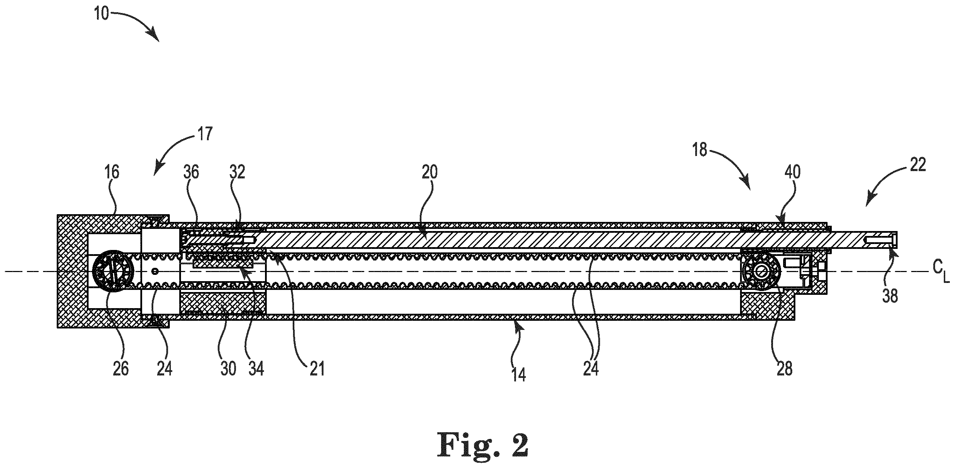

FIG. 2 is a sectional view of the linear actuator or thruster system (or apparatus) 10, taken along line AA-AA of FIG. 1. As shown in FIG. 2, output rod 20 extends from a first or proximal (internal) end 21 of rod 20, positioned within the actuator housing 14, to a second or distal (external) end 22 of rod 20, extending longitudinally outward from distal end 18 of actuator housing 14. An (e.g., endless) drive belt 24 extends from drive pulley 26 in proximal end 17 of actuator housing 14 to idler pulley 28 in distal end 18.

A piston-type coupling member 30 is disposed within actuator housing 14 along longitudinal axis or centerline C_{L}. Drive belt 24 is configured to drive piston member 30 in reciprocal motion along axis C_{L}, with output rod 20 having a first end 21 coupled to piston member 30, opposite second end 22. The second (exterior) end 22 of output rod 20 is selectively positionable outside the distal (front) end 18 of actuator housing 14, in response to the reciprocal motion of output rod 20 along axis C_{L}. Drive belt 24 is coupled to drive pulley 26 at the back (proximal) end 17 of actuator housing 14, and to idler pulley 28 in the front end 18, opposite drive pulley 26.

More generally, any suitable belt drive system can be configured to reciprocally drive piston coupling 30 along longitudinal axis C_{L} of actuator housing 14 according to any of the embodiments herein; e.g., with piston 30 coupled to a selectively positionable off-axis output rod 20, as described above. In one design, a continuous timing belt 24 is operated by a drive pulley 26 rotationally coupled to an electric servomotor, DC motor or stepper motor 12, which is configured to selectively position distal end 22 of output rod 20 with respect to front end 18 of actuator housing 14. For example, timing belt 24 can be coupled to and between a drive pulley 26 and idler pulley 28 disposed along longitudinal axis C_{L} of housing 14, with output rod 20 positioned above timing belt 24, in a generally parallel off-axis configuration.

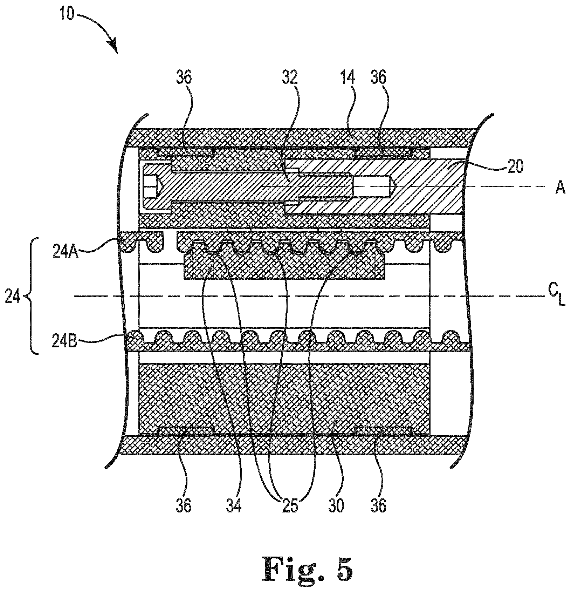

The output rod 20 is coupled to drive belt 24 via a piston-type coupling member 30, for example by seating first (proximal) end 21 into an axial cavity in the upper portion of coupling member (drive member or piston) 30, using a screw or other mechanical coupling for thrust rod attachment 32. A toothed timing belt or drive belt 24 can be utilized in the drive system; e.g., with a plurality of inwardly or outwardly-projecting teeth configured for engagement with complementary features on belt clamp 34. Belt clamp 34 is mechanically fastened to or within the body of coupling member 30, for example attaching the top or upper portion of drive belt 24 to the inner surface of coupling member 30, as shown in FIG. 2 (see also FIG. 5).

Wear rings or other sliding engagement members 36 are provided between the outer radius (or other outer surface) of coupling member 30 and the inner radius (or inner surface) of the actuator main body (e.g., tube or cylinder) housing 14. Suitable materials for wear rings 36 include durable polymers, metals, and composite materials, selected for providing a sliding engagement between piston or coupling member 30 and the inner surface of actuator housing 14. Alternatively, discrete wear members 36 can be provided on the outer circumference of the piston or other coupling member 30, or on the inner surface of actuator housing 14 (e.g., in rail form).

In operation, drive belt 24 is engaged to urge or move coupling member 30 and output rod 20 back and forth in an axial or longitudinal fashion within the actuator housing or tube 14, when drive belt 24 is engaged in corresponding back-and-forth motion between drive pulley 26 and idler pulley 28. A tapped hole or other tooling engagement feature 38 is provided in or on the distal end of output rod 20, in order to position a tool or workpiece longitudinally with respect to linear actuator housing 14.

In the configuration of FIG. 2, output rod 20 is positioned in an off-axis relationship with respect to actuator tube or housing 14, parallel to but radially outward from the actuator axis or centerline C_{L}. A bushing 40 is provided at front (distal) end 18 of actuator housing 14, supporting output rod 20 in sliding engagement above toothed or endless drive belt 24. Drive and idler pulleys 26 and 28 rotate in either a clockwise or counterclockwise sense when belt 24 drives output rod 20 forward and backward, respectively.

Alternatively, output rod 20 can be positioned above, below, or to either side of drive belt 24. In addition, either the top or bottom portion of drive belt 24 can be engaged with coupling member 30, and the back-and-forth motion of output rod 20 can be reversed with respect to the corresponding clockwise and counter-clockwise rotation of pulleys 26 and 28.

In some designs, actuator housing 14 is formed as a cylinder, or has a cylindrical or elliptical bore having a substantially circular or oval cross section, with a similarly-shaped piston (or piston coupling) 30 disposed about longitudinal axis C_{L}, perpendicular to the cross section. Alternatively, actuator system 10 may utilize a square, rectangular, polygonal, or other configuration for housing 14, with coupling member 30 being adapted accordingly. In each of these designs, one or more wear members 36 can be disposed in sliding engagement between piston 30 and the inner surface of actuator housing 14; e.g., with one or more wear rings 36 disposed about piston 30, as shown in FIG. 2. Alternatively, wear members can be oriented either along or transverse to axis C_{L}, in either continuous or discrete form, and configured for differently shaped piston members 30 and actuator housings 14.

A bushing 40 can be provided in front end 18 of actuator housing 14, disposed in sliding engagement with output rod 20 proximate distal end 22. For example, a ring-type bushing or bearing 40 can be disposed about output rod 20 in end cap 56, with rod axis A generally parallel to and offset from (e.g., above) longitudinal axis C_{L} of actuator housing 14.

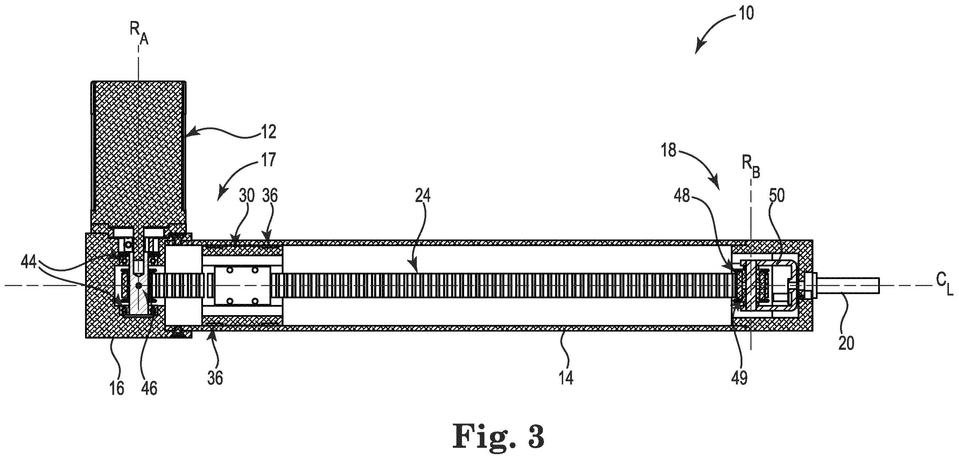

FIG. 3 is an alternate sectional view of thruster or actuator system 10, taken along line BB-BB of FIG. 1. As shown in FIG. 3, an motor 12 (e.g., stepper motor or servomotor) is utilized to drive timing belt 24, coupled in transverse orientation with respect to actuator housing via motor mount 16. In this configuration, rotational axis R_{A} of motor 12 is generally perpendicular to the longitudinal dimension of actuator housing 14, as defined along the actuator centerline or axis C_{L}.

Drive pulley assembly 46 includes a drive pulley supported in rotation about axis R_{A} on shaft bearings 44, within motor mount 16 at the back end of actuator housing 14 (proximal end 17). Idler pulley assembly 48 includes an idler pulley supported in rotation about axis R_{B} on a needle bearing (or other bearing) 49, at the front end of actuator housing 14 (distal end 18). In this particular example, the drive and idler pulley rotational axes R_{A} and R_{B} are oriented generally parallel to one another, and generally perpendicular to the longitudinal dimension of actuator housing 14.

Motor 12 is rotationally coupled to drive pulley assembly 46, for example in a perpendicular mount configuration with the motor shaft rotational axis aligned along the drive pulley rotational axis (R_{A}), as shown in FIG. 3. Drive pulley assembly 46 drives continuous belt 24 into motion along longitudinal axis C_{L} of the thruster or actuator 10, between drive pulley assembly 46 and idler pulley assembly 48. Yoke tensioner (or yoke assembly) 50 provides precise axial positioning of idler pulley assembly 48 with respect to drive pulley assembly 46, imparting the desired tension loading onto continuous drive belt 24.

In additional to servo type electric motors 12, stepping motors, DC motors, AC motors and other motor drive systems can be utilized to rotate drive pulley assembly 46. Motor 12 can be also be mounted with the motor shaft and motor rotational axis in a transverse orientation as shown, or a generally parallel orientation with respect to longitudinal axis C_{L} of actuator housing 14 (for example, using a gearbox or separate belt drive to couple motor 12 to drive pulley assembly 14).

Suitable materials for continuous drive belt 24 include metal reinforced polymers and rubberized plastics, with inwardly-projecting teeth configured to engage drive pulley assembly 46 and idler pulley assembly 48. Alternatively, continuous drive belt 24 can be provided in the form of a metal drive chain, or a substantially smooth or toothless drive belt.

FIG. 3 shows output rod 20 in a retracted position. In this position, continuous belt 24 is driven to position piston coupling 30 in a generally proximal direction with respect to distal end 18 of actuator housing 14; that is, toward drive pulley 26 in the back (proximal) end 17 of actuator 10, and away from idler pulley 28 in the front (distal) end 18. Output rod 20 is engaged with piston coupling 30, so that the tooling or workpiece on distal end 22 is retracted toward the front of actuator housing 14.

Motor 12 is rotationally coupled to drive pulley assembly 46, and configured to selectively position drive member 30 along longitudinal axis C_{L} by driving belt 24 in response to the rotation of pulley assembly 46. Drive member 30 is coupled to the upper or lower portion of belt 24, and disposed in reciprocal engagement with the interior surface of actuator housing 14.

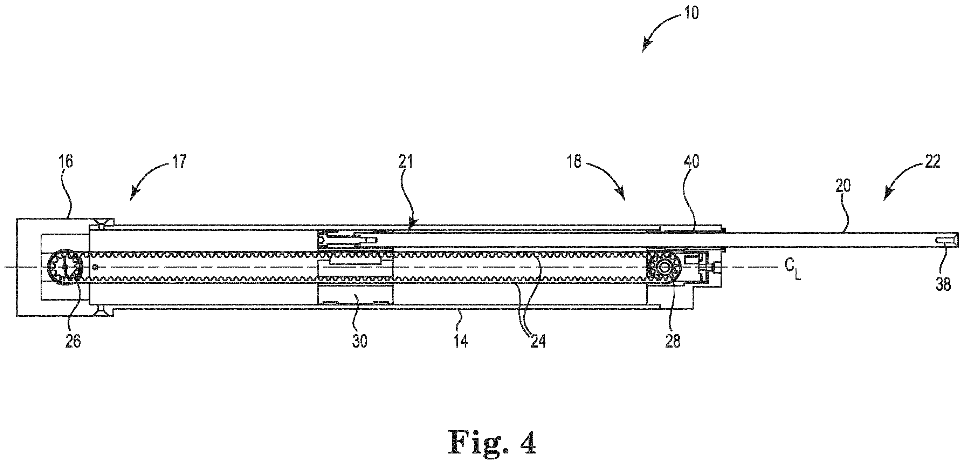

For example, a piston-type drive member 30 may be disposed about belt drive 24 along longitudinal axis C_{L} of actuator housing 14, as shown in FIG. 3. In this design, output rod 20 can disposed generally parallel to and offset from belt drive 24, with respect to longitudinal axis C_{L} as shown in FIG. 4.

FIG. 4 is a side cutaway view of actuator system 10, showing output rod 20 in an extended position. In this position, continuous belt 24 is driven to position coupling 30 in a generally distal direction with respect to proximal end 17 of actuator housing 14; that is, toward idler pulley 28 in the front (distal end) 18 of actuator 10, and away from drive pulley 26 in the back (proximal) end 17. Tooling engagement 38 is driven away from the front of actuator housing 14 to an extended position on distal end 22 of output rod 20, opposite coupling 30 on proximal end 21.

Generally, continuous belt 24 operates as a linear timing belt or timing chain, driven by motor 12 between drive pulley 26 and idler pulley 28. More specifically, drive belt 24 is configured to position piston coupling 30 along longitudinal axis C_{L} of actuator housing 14, between drive pulley 26 in proximal end 17 of housing 14 and idler pulley 28 in distal end 18, respectively. Piston coupling 30 is attached to off-axis output rod 20, which moves back and forth along with piston coupling 30.

Electric motor-type, belt-driven linear actuator systems 10 can combine the functionality of screw-driven linear actuators and pneumatic rod type cylinders, utilizing a precision belt drive system. In particular, timing belt 24 can be driven at high speed to precisely position coupling 30 within actuator housing 14, extending tooling engagement 38 on distal end 22 of output rod 20 to one or more extended positions with respect to the front of housing 14, and then returning tooling engagement 38 to one or more retracted positions, in reciprocal fashion. Belt-driven actuator system 10 thus provides high-speed functionality of a pneumatic device, and also provides precision positional control characteristics of a screw-type linear actuator.

Actuator system 10 operates with a piston coupling or other drive member 30 disposed in reciprocal engagement within actuator housing 14, along longitudinal axis C_{L}. The output rod 20 is coupled to drive member 30 at first (interior) end 21, within housing 14, and extends to second (exterior) end 22, outside housing 14 and opposite first end 21. Belt drive 24 is coupled to drive member 30 within housing 14, and configured to selectively position drive member 30 and first end 21 of output rod 20 along (or adjacent to) longitudinal axis C_{L}. Thus, second end 22 of output rod 20 is selectively positioned outside housing 14 with respect to front end 18, in response to the reciprocal motion of drive member 30 along axis C_{L} inside housing 14.

More specifically, actuator system 10 can be configured to position output rod 20 at speeds of at least 80 inches per second (that is, with a linear velocity of 200 cm/s or more). Lead screw and ball screw actuators are not easily configured for this form of motion, as the power screw typically reaches its critical (rotational) speed at a lower maximum linear velocity. That is, typical screw-driven actuators are not able to spin fast enough to achieve the desired linear velocity. Pneumatic actuators, on the other hand, require a compressed air source, and may not provide the same precision in positioning the output rod (e.g., at intermediate locations between the farthest extended and most retracted positions).

Depending upon application, the belt drive system may include a timing belt 24 coupled to drive member 30 between drive pulley 26 and idler 28, each disposed within actuator housing 14; e.g., along longitudinal axis C_{L} as shown in FIG. 4. The timing belt drive configuration of actuator 10 does not require a compressed air source, and provides the same precision in linear position anywhere along range of motion of output rod 20. Belt-driven linear actuator 10 is also less sensitive to critical speed than traditional screw-type systems, allowing output rod 20 to be driven at substantially higher linear speed. By coupling output rod 20 to timing belt 24 at piston 30, output rod 20 can thus be extended and retracted to position a workpiece or tooling engagement 38 in similar fashion to a pneumatic cylinder rod, but in a lightweight, "airless" (electrically-driven), high-speed precision linear actuator system 10. Belt-driven linear actuators 10 also provide high linear velocity without the critical speed limitations of a rotating power screw configuration, and without requiring a source of compressed air, as in a traditional pneumatic cylinder device.

FIG. 5 is a detail view of actuator system 10, showing the piston-type coupling 30 between output rod 20 and drive belt 24. As shown in FIG. 5, actuator system 10 utilizes a cylindrical tube type housing 14, containing a mating piston coupling 30 configured to couple belt 24 to output rod 20. The proximal end of output rod 20 is positioned within an axial bore in piston coupling 30, and attached using a screw or other mechanical rod attachment 32.

In contrast to typical pneumatic piston actuators, output rod 20 is disposed in an offset configuration within actuator housing 14, with rod axis A positioned parallel to and radially offset from centerline C_{L}. In the particular configuration of FIG. 5, output rod 20 is disposed above timing belt 24, with rod axis A positioned between the inner surface of actuator housing 14 and top portion 24A of timing belt 24, opposite bottom portion 24B. Alternatively, output rod 20 can be located with rod axis A to either side of timing belt 24, below timing belt 24, or both to the side of and above or below timing belt 24.

In off-axis actuator configurations, output rod 20 is offset within actuator housing 14, generally parallel to and spaced from drive belt 24 along longitudinal axis C_{L}. Drive belt 24 may be provided in the form of a timing belt, with inwardly-projecting teeth 25 configured to engage a complementary sprocket structure on one or both of drive pulley 26 and idler pulley 28. A belt clamp 34 can be configured to attach piston 30 to timing belt 24, for example by engaging inwardly-projecting teeth 25 on top portion 24A, with output rod 20 disposed above belt 24 and in off-axis relationship with respect to centerline C_{L} of actuator housing 14.

Piston coupling 30 is closely fitted to the inner surface of cylindrical tube or housing 14 using sliding wear rings 36, and is reciprocally driven through its travel length within actuator cylinder or housing 14 using timing belt (or transmission) 24. The output rod 20 is fastened off-axis with respect to centerline C_{L} of housing 14 and piston coupling 30, with rod axis A located over drive belt 24 as described above.

This configuration provides space to attach timing belt 24 to piston coupling 30 via a belt clamp 34 or other mechanical attachment. For example, belt clamp 34 can be configured to engage one or more inwardly-protruding teeth or other features 25 on timing belt 24, which is centered about the main axis of motion of piston 30, along centerline C_{L} of piston 30 and actuator housing 14.

In this particular design, actuator system 10 utilizes an "endless" timing belt 24. Other configurations may be constructed using a bulk belt material, for example with the ends joined together at belt clamp 34, or within piston coupling 30 (or at another location along top portion 24A or bottom portion 24B of timing belt 24). Similarly, belt 24 may be toothed or smooth, with belt clamp or coupling 34 configured accordingly. Belt 24 may also incorporate alternate timing features, e.g., optical or electromagnetic.

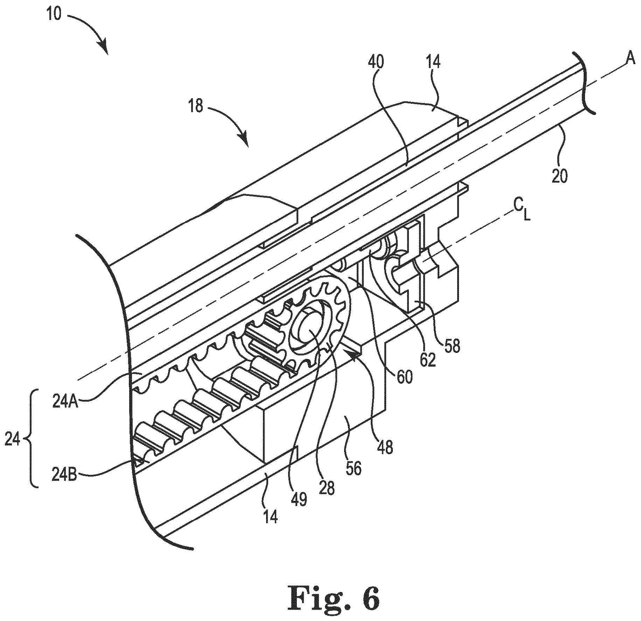

FIG. 6 is a detail view showing the distal (or front) end 18 of actuator system 10, including idler pulley 28 and a bearing or bushing 40 disposed about output rod 20, in sliding engagement proximate second (exterior) end 22. As shown in FIG. 6, front end cap (or head) 56 of actuator housing 14 includes rod bushing 40, also off axis, and configured to support output rod 20 in sliding engagement along axis A extending though end cap 56. Rod bushing 40 and end cap 56 provide support and guidance for output rod 20 during reciprocal motion of actuator 10, complementary to the support provided by the piston coupling at the proximal end (see FIG. 5).

Front end cap or head 56 of actuator housing 14 also contains yoke tensioner assembly 50, disposed about idler pulley 28 along the piston axis or centerline C_{L} of actuator housing 14. Yoke assembly 50 includes a front plate 58 and arms 60 on either side of drive belt 24, supporting idler pulley 28 in rotation about needle bearing 49. Yoke assembly 50 can also include a screw adjustment or other tensioning mechanism 62 to provide precision positioning of idler pulley 28 along centerline C_{L} of actuator housing 14, and to provide the desired tension along timing belt 24.

Yoke (or yoke assembly) 50 has at least one arm 60 configured to rotationally support idler pulley (or idler) 28, and is selectively positionable along axis C_{L} to tension drive belt 24 between drive pulley 26 and idler 28. For example, yoke 50 may include a front plate 58, which is selectively positionable along axis C_{L} with respect to front end cap 56. In this particular configuration, two arms 60 extend from front plate 58 along longitudinal axis C_{L}, in order to rotationally support idler pulley 56 on either side.

In these various examples, actuator system 10 includes an output rod 20 coupled at one (inner) end 21 to a belt-driven piston coupling 30, which is disposed within an actuator housing or cylinder 14. A drive belt 24 is configured to urge or drive piston coupling 30 in reciprocal motion along longitudinal axis or centerline C_{L} of actuator housing 14, so that the other (outer) end 22 of output rod 20 is selectively positionable with respect to front end 18 of actuator housing 14, outside end cap 56 in the axial direction.

Alternatively, actuator system 10 comprises a piston 30 disposed within actuator housing 14. Drive belt 24 is configured to urge or drive piston 30 in reciprocal motion along longitudinal axis C_{L} of housing 14. Output rod 20 has one end 21 coupled to piston 30 and another opposite end 22 selectively positionable outside the front end of housing 14, according to the reciprocal motion of piston 30 along centerline C_{L}. Drive belt 24 can be coupled between a drive pulley 26 in back end 17 of housing 14 and an idler pulley 28 in front end 18; e.g., with idler pulley 28 positioned opposite drive pulley 26 along longitudinal axis C_{L}.

The yoke (or yoke assembly) 50 can be configured with at least one arm 60 to rotationally support idler pulley 28 in a selected position along longitudinal axis C_{L} of actuator housing 14, in order to provide a desired tension to drive belt 24 between drive pulley 26 and idler pulley 28. For example, yoke 50 may include a front plate 58 selectively positionable with respect to end cap 56 on front end 18 of actuator housing 14 via a screw or other adjustment mechanism 62. Two opposing arms 60 can extend from front plate 58 within actuator housing 14, supporting idler pulley 28 in rotation at the selected position along longitudinal axis C_{L}.

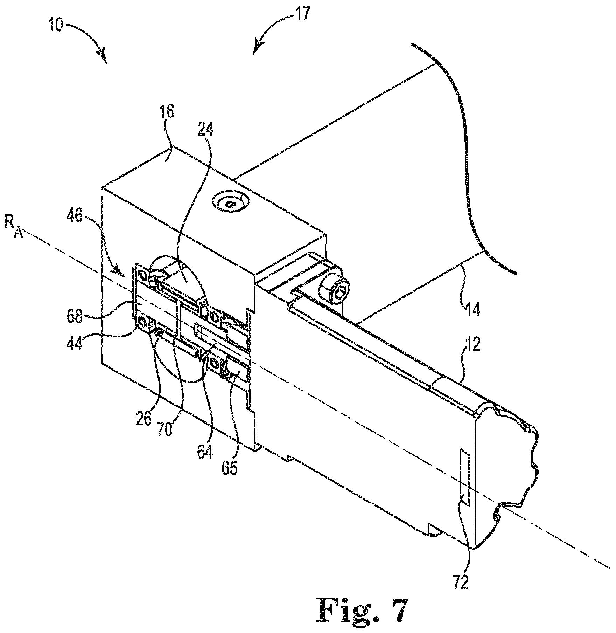

FIG. 7 is a detail view showing the proximal (back) end 17 of actuator system 10, including motor 12, motor mount 16 and drive pulley 26. As shown in FIG. 7, the drive or motor end (proximal end 17) of linear actuator device 10 contains mounting structure 16 for motor 12, which is rotationally coupled to drive pulley 26 via motor shaft (or output shaft) 64, extending along co-rotational axis R_{A} of drive pulley 26 and motor 12.

A stepper motor, DC motor, servomotor or other motor 12 can also be used; e.g., coupled to actuator housing 14 via motor mount 16 at back end 17 of housing 14. In transverse mount configurations, as described herein, motor shaft 64 can be directly coupled to drive pulley 26, so that motor 12, drive pulley 26 and idler pulley 28 all have generally parallel rotational axes, each of which is disposed generally transverse or perpendicular to longitudinal axis C_{L} of actuator housing 14.

For example, motor 12 can be rotationally coupled to drive pulley 26 along a motor axis R_{A}, substantially transverse to longitudinal axis of housing 14. Bearings (e.g., ball bearings) 44 support drive pulley 26 in rotation about drive pulley axis R_{A}, for example using a split bore and clamp or locking collar 65 to couple drive pulley shaft 68 and motor shaft 64. Drive pulley 26 and pulley shaft 68 can be rotationally locked using a transverse or radial pin 70, or similar mechanism.

The position of drive pulley 26 and timing belt 24 is precision controlled to extend and retract the output rod in a longitudinal direction with respect to actuator housing 14, as described above. For example, a high speed motor 12 may include a rotary encoder or controller 72 within the motor housing, as shown in FIG. 7, or a similar encoder or controller may be disposed along or at the end of motor shaft 64 and pulley shaft 68. Alternatively, an electric stepper motor 12 or DC motor configuration can be employed, with or without a separate encoder/controller configured to drive timing belt 24 by selective rotation of drive pulley 26.

For example, a motor 12 can be provided to drive actuator system 10 by rotationally coupling motor 12 to drive pulley 26. A motor controller or encoder system 72 can then be provided to selectively position the far end 22 of output rod 20 outside front end 18 of actuator housing 14, based on the rotational position of motor 12.

Methods of operating linear actuator system 10 are also encompassed by the present disclosure, according to any of the examples and embodiments herein. For example, an electric motor 12 can be rotationally coupled to drive belt 24 via drive pulley 26, and controlled using an encoder or other motor controller 72 to selectively position distal end 22 of output rod 20 based on the rotational position of motor 12, drive pulley 26, and idler pulley 28.

### LINEAR ACTUATOR APPLICATIONS

An exemplary actuator system includes an actuator housing having a longitudinal axis, a piston member disposed within the actuator housing along the longitudinal axis, and a drive belt coupled to the piston member. The drive belt is configured to drive the piston member in reciprocal motion along the longitudinal axis, with an output rod having a first end coupled to the piston member and second end selectively positionable outside the actuator housing, in response to the reciprocal motion of the piston member within the actuator housing.

In these systems the drive belt can be coupled to a drive pulley in the back end of the actuator housing, with an idler pulley in the front end, disposed opposite the drive pulley along the longitudinal axis. A yoke can be provided with at least one arm configured to rotationally support the idler pulley, where the yoke is selectively positionable along the longitudinal axis of the actuator housing to tension the drive belt between the drive pulley and the idler pulley. For example, the yoke may have a front plate selectively positionable with respect to the front end of the actuator housing, and two arms extending along the longitudinal axis to rotationally support the idler pulley between them.

Additional features may include an electric motor rotationally coupled to the drive pulley and a motor controller configured for selective rotation of the motor, where the second end of the output rod is positioned outside the actuator housing based on the selective rotation. Suitable motors include a stepper motor, a DC motor, or an electric servomotor; e.g., transversely mounted to the actuator housing in the back end, where the electric motor, the drive pulley and the idler pulley each has a rotational axis disposed generally transverse to the longitudinal axis of the actuator housing.

The output rod can be disposed off-axis within the actuator housing, generally parallel to and spaced from the drive belt along the longitudinal axis. The drive belt can include a plurality of projecting teeth; e.g., configured for engagement with the drive pulley, with a clamp attachment configured to attach the piston member about the drive belt by engagement with one or more of the teeth.

The piston member can also be disposed about the drive belt, along the longitudinal axis of the actuator housing, and configured in reciprocal engagement with the inner housing surface. Where the actuator housing is a cylinder or has a cylinder or elliptical bore with a substantially circular or oval cross section, the piston member can be disposed about the longitudinal axis, with one or more wear members or rings disposed in sliding engagement between the piston member and the inner surface of the actuator housing. A bushing can also be disposed in sliding engagement about the distal end of the output rod, in the front end of the actuator housing.

The linear actuator apparatus may also have a drive member in reciprocal engagement within a housing, disposed along the longitudinal axis. The output rod has a first end coupled to the drive member within the housing, and a second end positionable exterior to the housing, opposite the first end. A belt drive is configured to selectively position the drive member within the housing, along the longitudinal axis, with the belt drive disposed within the housing and coupled to the drive member so that the second end of the output rod is selectively positioned outside (or exterior to) the housing.

Suitable belt drives include a timing belt coupled to the drive member; e.g., between a drive pulley and an idler disposed within the housing along the longitudinal axis. A motor can be rotationally coupled to the drive pulley, and configured to selectively position the drive member along the longitudinal axis by rotation thereof. Where the motor is rotationally coupled to the drive pulley along a motor axis, the axis can be substantially transverse (perpendicular or orthogonal) to, or substantial along (parallel to) the longitudinal axis of the housing.

Suitable drive members include a piston coupled to an upper or lower portion of the belt drive, and disposed in reciprocal engagement with an interior surface of the housing; e.g., where the piston member is disposed about the belt drive along the longitudinal axis of the housing. The output rod can be generally parallel to and offset from the belt drive (e.g., with respect to the longitudinal axis), with a bushing disposed about output rod, in sliding engagement proximate the second end.

Methods of operating such an actuator system or apparatus include supporting the output rod in sliding engagement within the actuator housing, where the output rod has a first end attached to the drive member and a second end selectively positionable exterior to the actuator housing, opposite the first end. Additional method steps include positioning the drive member in reciprocal motion within the actuator housing, along the longitudinal axis, and selectively controlling the reciprocal motion with a belt drive system; e.g., with a timing belt disposed between a drive pulley and an idler, along the longitudinal axis within the housing.

Where the drive member is coupled to the timing belt between the drive pulley and the idler, the second end of the output rod can be selectively positioned based on the rotational position of the drive pulley. Where the drive member comprises a piston disposed about the timing belt and coupled to its upper or lower portion, the method can include positioning the piston in reciprocal sliding engagement with the inner surface of the actuator housing. The method can also include supporting the output rod in sliding engagement at or proximate the second end, parallel to and offset from the longitudinal axis of the actuator housing.

### PART PLACEMENT

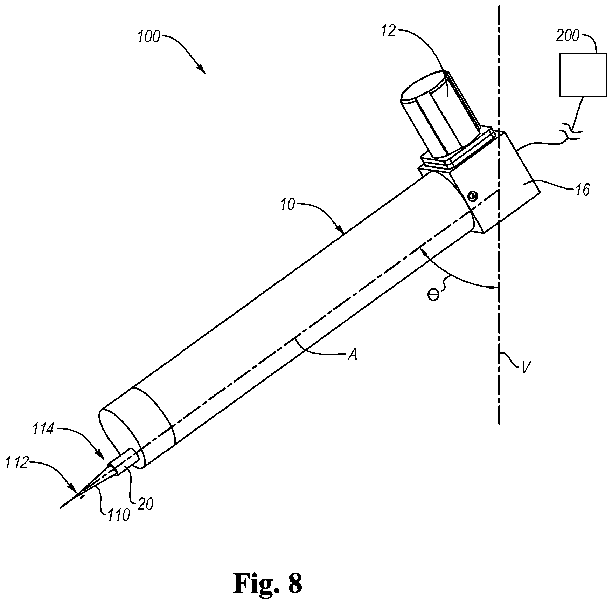

FIG. 8 is a schematic illustration of a part placement system 100 with an actuator subsystem 10 operably coupled to a controller 200. As described above, the actuator subsystem 10 may include an output rod 20 operably connected to an electric motor 12. Specifically, operation of the motor 12 positions the output rod 20 at a selected axial position or location; e.g., with the output rod 20 extending from the actuator housing and the motor mount 16 connecting the motor 12 to the output rod 20 via a belt drive or screw. The controller 200 generates and transmits signals to drive the motor 12, and, responsive to the signals received from the controller, the motor 12 positions the output rod 20 at suitably selected locations.

Generally, the controller 200 generates electric signals or pulses that are received by the motor 12. The actuator subsystem 10 can also include or be operably connected to an encoder (e.g., a digital or analog encoder), which generates signals for the controller 200 to determine the position of the output rod 20. For example, signals from the encoder may correspond to the rotational position of the motor 12, and the rotational position of the motor 12 may determine the axial position of the output rod 20. Depending on embodiment, a screw drive or high-speed belt drive can be employed to position the output rod 20, as described herein.

For example, the part placement system 100 can include a linear actuator 10 with an electric motor configured for positioning a tool or probe member 110 on the end of the output rod 20, or a similar engagement mechanism 110 adapted for positioning parts. For example, a suitable probe 110 can be provided in the form of a tapered shaft with a tip 112 and shoulder or stop 114 attached to or incorporated onto the end of the output rod 20. Other tools and probes 110 can have a range of sizes, shapes and configurations, and the tip portion 112 can be configured to accept and secure parts with configurations that vary from one embodiment to the next.

In the illustrated example of FIG. 8, the probe 110 is provided in a shaft configuration, with a generally cone or needle-like (spear-shaped) tapered tip portion 112 adapted for engaging selected parts. The probe 110 can be formed with a cone-shaped or tapered tip 112 adapted to pass through an opening in the part (e.g., in a hollow part or similar component with a cavity, such as a weld nut), and the shoulder or stop 114 can be adapted to secure the part on the probe 110 as the output rod 20 moves from a first (part engagement) position with the probe adapted to engage the part, to a second (part placement position) with the probe 110 adapted for placement of the part with respect to a positioning feature adapted for a machine process, for example by releasing the part onto the weld pin of a resistance welding fixture.

Depending on embodiment, the controller 200 directs the actuator system 10 to advance the output rod 20 at a suitable acceleration from the first part engagement position toward the second part placement position, where the part is released from the probe for engagement with the weld pin or other locating fixture. The acceleration may be greater than the corresponding component of the gravity vector, so that acceleration of the output rod 20 maintains the part secured to the probe 110.

In some embodiments, the probe 110 is integrally connected to or fixed onto the output rod 20. Alternatively, the probe 110 may be provides as a generally separate component, separable from the rod 20, for example using a threaded fastening or similar mechanical engagement.

IAs shown in FIG. 8, the part placement system 100 includes a single probe 110 on the end of a single output rod 20. Alternatively, a plurality of probes can be connected to or integrated onto one or more output rods 20, for example using a fork-shaped engagement mechanism or other structure adapted to placing multiple parts.

The actuator system 10 can have any number of suitable orientations relative to the gravity vector along the vertical axis V. For example, the actuator system 10 may be oriented at an angle θ relative to the vertical axis V, and angle θ may be acute, with output rod 20 and probe or fixture 110 oriented in a downward direction. Alternatively, angle θ may be obtuse, with output rod 20 and probe 110 oriented in an upward direction, or the angle θ may be approximately ninety degrees, with output rod 20 and probe 110 oriented in a generally horizontal direction, perpendicular to the vertical direction.

Gravity acts on the part with force component F₁ in a longitudinal direction along the probe 110 (e.g., acting to move the part toward the end 112 of the probe 110, in the illustrated downward orientation). The gravitational force component F₁ = mₚ × g × cos θ, where mₚ is the mass of the part positioned on the end of the probe fixture 110, and g is the gravitational acceleration.

Friction acts on the part in a manner that tends to oppose sliding motion. For a stationary rod and part system, friction produces a force component F₂ in a direction opposite the gravitational component F₁, and with a maximum magnitude F₂ = µ × mₚ × sin θ, where µ is the coefficient of friction (or friction coefficient) between the part and the probe 110. If the gravitational component is high enough, a net force F_{L} = F₁ - F₂ can act longitudinally on the part, tending to move the part off the probe 110. More generally, under some operating conditions (e.g., depending on angle θ), the gravitational component F₁ may be greater in magnitude than the frictional component F₂, and in the absence of other forces a positive net force F_{L} may tend to move the part toward the tip 112 of the probe 110, in the direction away from the output rod 20.

The output rod 20 can be driven at an acceleration selected to retain the part on the probe 110; e.g., at an acceleration ar suitable to overcome the tendency of the part to fall of the probe tip. For example, the acceleration aᵣ may be greater than the magnitude of the net acceleration |F_{L}/ mₚ|. The acceleration ar may be associated with a constraint Fᵣ, as defined in the (accelerating) frame of the output rod 20, which would appear to act on the part in a manner opposite the gravitational acceleration, in order to retain the part on the probe 110. Further, reducing the acceleration ar of the probe to a lower value a_{d} can allow the part to move off the probe 110, for engagement with a locating fixture. Hence the acceleration of the probe 110 can be decreased over a transition region; e.g., from acceleration ar to a lower value a_{d} (referred to as either acceleration or deceleration, depending on sign), at which the part moves longitudinally relative to the stop 114 and along the probe 110 to be released from the probe tip 112.

At acceleration a_{d}, the part may have a suitable velocity to move off the probe 110 and onto the locating fixture. For example, the output rod 20 can be decelerated toward stop (zero velocity) at or near the part placement position, so that the probe 110 is substantially stationary for releasing the part onto a weld pin, before retracting the rod 20 back toward the first position to engage another part on the probe 110.

This contrasts with traditional pneumatic actuator designs, where the output rod is driven by compressed air and the probe accelerates continuously from the first (part engagement) position through to the second (part positioning) position, where the rod typically hits a hard stop defined by an elastic bumper or cushioning member. As described here, the acceleration of the output rod 20 can be modulated over the entire part placement stroke, including an extended transition region defined between the first (part engagement) position of the output rod, and the second (placement or release) position of the output rod. More generally, the controller 200 can be adapted for the linear actuator 10 to accelerate the output rod 20 from the first (part engagement) position to the transition region, and to reduce the acceleration of the output rod through the transition region to the second (placement) position, for releasing of the part from the probe tip 112 onto a weld pin or other locating fixture.

For example, the controller 200 may initially direct the actuator system 10 to move the output rod 20 together with the probe 110 at a first acceleration ar suitable to retain the part in motion from a first part engagement position toward a second part placement position, in order to sequentially engage, place and release a number of individual parts. When the probe 110 reaches the transition region defined between the first and second positions, the controller 200 can operate the actuator system 10 to reduce the acceleration of the output rod 20 and probe 110 to a lower (or negative) value ad, allowing the part to move off the tip 112 of the probe 110 and onto the weld pin or similar locating fixture. For example, in a transition region defined between the first (engagement) and second (placement) position of the output rod, the controller 200 can operate the actuator system 10 to decelerate the output rod 20 and probe 110 toward a stop in the placement position, for placement of the part in a desired location with respect to a workpiece; e.g., releasing the part onto a weld pin or placing the part with respect to a locating fixture.

Generally, the controller 200 can be configured to determine and modify the part engagement position, and the part placement and releasing positions. Depending on embodiment, the controller 200 can be configured to determine the part placement position based on the location of the output rod 20 when the probe 110 contacts the locating fixture. When the probe 110 contacts the locating fixture, the current demand to the motor 12 of the actuator system 10 may increase, while the position of the probe 110 remains substantially unchanged, or the motor current may change disproportionately relative to the change in position, as compared to free movement of the output rod 20 before the probe 110 contacts the locating fixture. The controller 200 can be adapted to correlate the change in motor current with the observed generally static or unchanged position of the output rod 20, when there is contact between the probe 110 and the weld pin or similar locating feature.

This calibration (or recalibration) process can be iterated for improved accuracy, and can proceed independently of the part placement cycle, without engaging a part on either the probe or the locating fixture. The speed of the output rod can also be substantially reduced during calibration to avoid damage to the placement fixture, so that the contact cycle may take a substantial fraction of a second or a few seconds or more, as compared to part placement cycles that may take place over a few tenths of a second or less.

Generally, controller 200 provides for precision calibration of the actuator 10, in order to position the output rod 20 with the tip of the probe 110 more precisely located with respect to the weld pin or other machine fixture than in other designs, such as designs using a pneumatic actuator. Further, the controller 200 can be configured to automatically determine the part placement position based on a test contact between the probe 110 and the weld pin, and to adjust the position of the probe 110 adjacent the weld pin for placing a nut or similar part, without direct contact between the weld pin and probe 110. This contrasts with other designs, where the probe 110 contacts the weld pin during every placement cycle, or where the end position of the probe 110 is determined by input from an operator, in a time consuming manual calibration process. The controller 200 can also determine a suitable transition region for the output rod 20, over which the controller 200 directs the actuator system 10 to reduce the acceleration of the output rod 20 so that the tip of the probe 110 comes to a stop with the output rod in the selected part placement position, adjacent the weld pin or other locating fixture.

Specifically, the controller 200 can direct the actuator system 10 to decelerate the output rod 20 as the probe 110 moves to the placement position at or adjacent the weld pin, where the part moves from the probe 110 to the locating fixture. When the probe 110 stops in the part placement position, the gap between the tip of the probe 110 and the tip 325 of the weld pin or other locating fixture 320 can be selected to ensure engagement of the part 80 with the pin 320, for example about 15 mil to about 30 mil (0.38 mm to 0.76 mm), or about 1 mm (about 40 mil) or less.

More generally, the gap between the tip 112 of the probe or similar part placement tool 110 and the top 325 of the weld pin or fixture 320 can be selected to ensure proper part placement, with less risk of the part dropping off the end of the probe 110 and not properly engaging the locating fixture or feature 320. The selected gap may also be larger or smaller, depending on the dimensions of the part 80, for example less than about 10 mil (0.25 mm) or up to about 40-50 mil (about 1.0 mm to 1.2 mm), or up to about 1 mm to 2 mm (40 mil to 80 mil), or up to about a tenth of an inch (2.5 mm), or more.

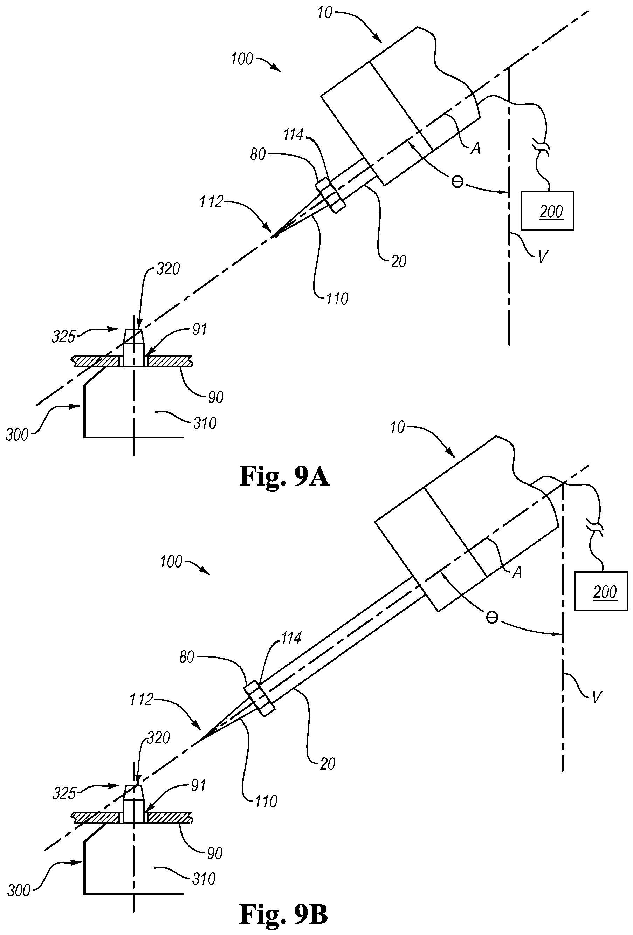

FIG. 9A is a schematic side view of a part placement system 100 with actuator 10, in which the probe 110 is positioned to receive a part. FIG. 9B is an alternate schematic side view of the part placement system 100, with the probe 110 positioned to dispense or release the part onto the weld pin 320 on a welding fixture 300, or similar positioning feature.

Suitable materials for probe 110 include hardened steel and other metals and metal alloys with properties selected for durability and service life in welding and machine tool applications. Suitable materials for weld pins 320 include copper, brass, and other high-conductivity metals and metal alloys. More generally, and depending on machining application, the locating fixture 320 can also be made of hardened steel and other metal alloys, or from composite materials.

FIGS. 9A and 9B schematically illustrate operation of the probe 110, according to one or more embodiments. For example, as shown in FIG. 9A, the probe 110 may receive and secure a part when the probe is at the first position. In one embodiment, the part 80 comprises a weld nut or other component that can be positioned and secured on the probe 110. The part received and carried by the probe 110 may also have any number of suitable configurations and sizes; e.g., a washer, tube, bolt or other mechanical fastener, a tab or projecting structure, or other mechanical component.

Generally, the part 80 can be slidably engaged on the probe 110; e.g., near the tip 112 of the probe 110. As the probe 110 is advanced by the actuator system 10 to the first position, the probe 110 engages the part 80. For example, the probe 110 may be formed as tapered shaft, with a pointed tip 112 and a shoulder or stop 114 adjacent the output rod 20, so that the part 80 rests against the tapered shoulder or stop 114 when fully engaged. The probe 110 can then be moved to the part placement position, at a suitable acceleration to retain the part 80 on the probe 110, and the controller 200 can be configured to direct the actuator system 10 to advance the output rod 20 and probe 110 along longitudinal rod axis A, toward a weld pin or similar part placement structure 320.

The size, shape and structure of the locating feature 320 will also vary from one embodiment to the next, based on the configuration of the corresponding machine fixture 300. In the illustrated embodiment, a welding fixture 300 is provided with a metal lower table 310 and weld pin 320. The tip 325 of the pin 320 is sized and configured to accept the part; e.g., the pin 320 may include a generally tapered tip portion 325 that is sized configured to receive a weld nut or similar part 80.

The part 80 may be welded to another component such as to a steel plate or other sheet metal workpiece 90, as shown in FIG. 9A. For example, the workpiece 90 may include an opening or hole 91 so the tapered weld pin 320 can extend through the opening 91 to receive the part 80, and to position or locate the part 80 relative to the workpiece 90. Further, the weld pin 320 may include a shoulder that is formed between the tapered pin 320 and the lower table 310, and the workpiece 90 may rest on the shoulder, positioned over the welding fixture 300 so that the weld pin 320 extends through the opening 91.

In FIG. 9A, the output rod 20 is shown in the first position, with the part 80 engaged with and secured on the probe 110. The controller 200 directs the actuator system 10 to extend the output rod 20 together with the probe 110 and the part 80 along the rod axis A, and at the selected angle θ relative to the vertical axis V. In particular, the tip 112 of the probe 110 can be oriented generally along the longitudinal axis A, with the weld pin 320 having longitudinal axis B. The probe 110 together with the part 80 can then be accelerated from the first position shown in FIG. 9A to second position for releasing the part, shown in FIG. 9B.

As the part 80 is positioned (e.g., with the controller 200 directing the actuator system 10 to extend the output rod 20 with the part 80 engaged on the probe 110), the actuator system 10 can reduce the acceleration of the output rod 20, thereby releasing the part 80 from the probe 110. Specifically, the controller 200 can operate the actuator system 10 to decelerate the output rod 20 toward a stop, so that the part 80 moves off the probe 110 in a direction along the rod axis A, and onto a weld pin or similar part receiving fixture 320 oriented along a different axis B.

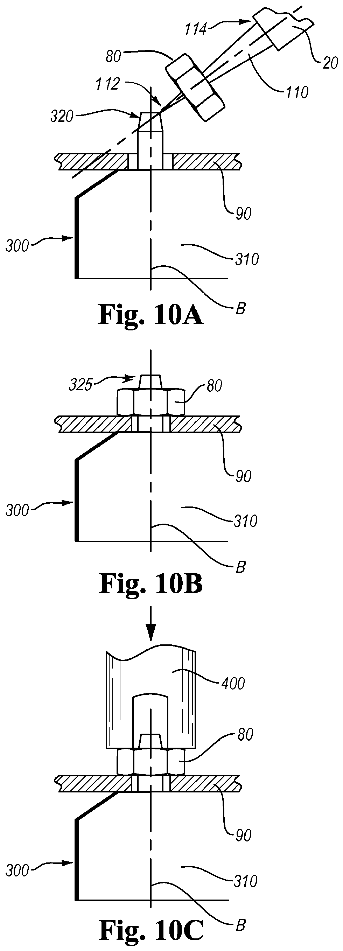

FIG. 10A is a detail view of a part placement tool or probe 110 on an output rod 20, in a part placement or dispensing position. In this embodiment, the output rod 20 undergoes forward motion along the longitudinal actuator axis A, so that the tip 112 of the probe 110 is positioned near, at or adjacent a weld pin or similar fixture 320. In the particular example of FIG. 10A, the probe 110 is positioned adjacent a weld pin 320, with a spacing of about 15 mil to about 30 mil (about 0.4 mm to about 0.8 mm), depending on part size and configuration. More generally, the tip 112 of the probe 110 can be positioned at or near the top end 325 of a weld pin 320 or locating feature on a welding table 310 or other machine fixture 300, with spacing selected for the part 80 to be released from the probe 110 and engage securely with the pin 320. Depending on part size, the spacing between the tip 112 of the probe 110 and the pin 320 can range from less than a few mil (less than 0.05 mm) up to about 5-10 mil (up to 0.25 mm), or more. In particular embodiments, the probe/fixture spacing may range from about 10-20 mil (about 0.25-0.50 mm) or up to about 20-40 mil (about 0.5-1.0 mm), or from 20-40 mil to about 50-100 mil (1.25 mm to 2.5 mm), or more.

FIG. 10B is a detail view of a part 80 positioned on a weld pin or similar locating fixture 320. As the controller operates the actuator to advance the output rod and probe toward the weld pin 320, the acceleration is reduced and the part 80 is released from the probe to engage the pin fixture 320. Depending on embodiment, the probe can be formed as a shaft or similar structure in order to guide the part 80 toward the weld pin 320 as the output rod decelerates toward the part placement or release position, so that the part 80 slides off the end of the probe and onto the tip 325 of the weld pin 320, adjacent the workpiece 90. Controlling the probe speed and spacing of the probe tip adjacent the weld pin member 320 facilitates engagement of the part 80; e.g., as the part 80 slides off the probe end of the output rod and engages the fixture 320 for positioning the part 80 with respect to the workpiece 90 and weld table 310, or other component of a suitable machine fixture 300.

It should be appreciated that the part locating fixture 320 can be sized, configured and positioned to receive a variety of parts 80 by advancement of the output rod and probe to the part placement position adjacent the fixture 320, releasing the part for engagement therewith. For example, the weld pin 320 of a welding table 310 can be oriented and positioned to engage the part 80 onto the tip 325 of the weld pin 320 as the output rod is advanced to the placement position, releasing the part 80 from the probe and onto the pin 320 without direct contact between the probe tip and pin 320.

As shown in FIGS. 10A and 10B, the controller operates the actuator to position the probe end 110 of the actuator rod 20 at or adjacent the weld pin 320. Further, the controller can also direct the actuator to advance the output rod 20 so that probe 110 contacts the fixture 320. The probe 110 exerts a force on the pin 320 as the probe tip 112 contacts the top end 325, and the controller can determine the power drawn by the actuator based on the motor current delivered to the actuator motor (or a change in the motor current), relative to the corresponding change in position of the output rod 20.

In particular embodiments, the controller can be configured to determine the position of the output rod 20 at the point of contact between the probe 110 and the tip 325 of the weld pin 320. For example, the controller can be programmed to monitor the motor current as the probe 110 approaches the weld pin 320, and to determine the probe stop position in response to an increase in the motor current required to drive the output rod 20 when the probe tip 112 contacts the weld pin or other locating fixture 320.

Over the course of repeated part placement cycles, the tip 325 of the weld pin 320 will erode due to contact with the weld nut or other part 80, so that the gap between the weld pin 320 and probe tip 112 tends to increase over time. In welding applications, where the pin member 320 is commonly formed of copper, brass or other conductive materials that may be relatively soft as compared to the material of the weld nut or other part 80, the gap between the tip 112 of the probe 110 and the tip 325 of the pin 320 may increase to the point where the part 80 does not properly and consistently engage with the pin 325. To address this problem, the controller can be configured to periodically determine or recalibrate of the probe position, in order to adjust the part placement position to maintain the desired spacing between the end 112 of the probe 110 and the tip 325 of the pin 320, when placing the part 80. This reduces the risk of dropping or misplacing the part 80, even if the geometry of the weld pin or fixture 320 changes over time.

The part placement system can also include alternative mechanisms for detecting contact between the probe 110 and weld pin 320. For example, where the weld pin 320 and probe 110 are formed of conductive materials such as steel, copper, brass, etc., an ohmmeter can be operably coupled with the controller, in order to detect contact between probe end 112 and the tip 325 of the weld pin 320 based on a change in resistance across the probe 110 and the weld pin 320 on the lower table 310 of the machine fixture 300. Analogously, a voltmeter or ammeter cam be operably coupled between the weld pin 320 and the probe 110, so the controller can detect a change in voltage or current when the probe end 112 contacts the tip 325 of the weld pin 320. Alternatively, the controller can be operably coupled to an optical sensor system configured to detect the top edge or end 325 of the locating fixture 320 along longitudinal axis B, relative to the tip 112 of the probe 110, in order to determine the point of contact between probe 110 and pin 320, and the desired spacing between the probe tip 112 and the tip 325 of the pin 320.

In some embodiments, the controller can operate the actuator to advance the output rod 20 to contact the probe 110 against the weld pin 320 without dispensing a part 80 (e.g., during a calibration cycle of the part placement system 100). Additionally or alternatively, the controller can operate the actuator to advance the output rod 20 and position the probe 110 adjacent the weld pin 320, so that the part 80 is dispensed from the probe tip 112 onto the top end 325 of the weld pin 320 without the probe 110 contacting the weld pin 320. In some embodiments, the controller can be configured to operate the actuator to further advance the probe 110 to contact the weld pin 320 and determine the position of the output rod 20 when the probe tip 112 contacts the tip 325 of the weld pin 320.

Generally, the controller directs the actuator to advance the output rod 20 so the probe 110 contacts the weld pin 320 a suitable number of times during calibration of the part dispensing system. For example, the controller may periodically or intermittently calibrate the probe tip/pin spacing at preset or selected intervals, by operating the actuator to advance the output rod 20 to contact the tip 112 of the probe 110 with the tip 325 of the weld pin 320. As described herein, the controller can then adjust or change to the location of the part placement position, based on the determined probe stop position where the probe 110 contacts the weld pin 320, in order to position the output rod 20 so that the probe tip 112 maintains the desired spacing from the weld pin tip 325 when placing the part 80 on the pin member 320.

Generally, the controller can recalibrate the part placement and release positions by directing the actuator to advance the output rod 20 to contact the probe 110 with the weld pin 320, and adjusting the position at suitable intervals. For example, the controller may recalibrate the part placement and release positions after a selected number of part placement cycles (e.g., after every 10, 100, 1000 or 10,000 part placement cycles, or another suitable number of cycles). Additionally or alternatively, the controller can recalibrate the part placement and release positions after a selected operational time period (e.g., every 60 or 100 minutes, or on an hourly, daily or weekly schedule, or at another suitable interval).

The controller adjusts the location of the part placement position to that the probe 110 maintains a selected distance from the weld pin 320. Under some operating conditions, one or more portions of the weld pin 320 may wear during operation (e.g., at the tip 325), changing the geometry of the pin member 320, or the pin 320 may be replaced. The controller can update the location of the output rod 20 in order to accommodate wear or replacement of the pin 320, to maintain the selected spacing of the probe 110 from the point of actual physical contact between the probe tip 112 and the tip 325 of the weld pin 320. Thus, the spacing remains approximately or substantially the same during operation, even if the tip 325 of the weld pin 320 wears substantially, for example by adapting the controller to advance the probe 110 longitudinally along actuator rod axis A, closer to the weld pin tip 325 along the longitudinal axis B.

Similarly, as both the tip 325 of the weld pin 320 and the tip 112 of the probe 110 may experience wear from contact with the part 80, the controller can update the location of the part placement position along the rod axis A, relative to the longitudinal axis B of the weld pin 320. The controller can be adapted to change the part placement position of the output rod 20 as one or both of the pin 320 and probe 110 wears, so the selected distance is maintained between the probe tip 112 and the end 325 of the weld pin 320. Depending on embodiment, the controller can determine the part placement position so the tip 112 of the probe 110 maintains a suitable spacing from the tip 325 of the weld pin 320; e.g., where the tip 112 of the probe 110 is spaced from the nearest location on the top surface 325 of the weld pin 320 at a distance between about 0.005 inch (5 mil) and about 0.050 inch (50 mil), or about 0.125 mm to about 1.25 mm. Further, continuously or intermittently adjusting the part placement position of the output rod 20 can facilitate repeatable placement of the part 80 with respect to the weld pin tip 325, and consistent engagement of the part 80 onto the weld pin 320 adjacent the workpiece 90, thereby avoiding or minimizing dropping or misplacement of the part 80 relative to the workpiece 90 and weld table 310, or other machine fixture 300.

As shown in FIG. 10B, after the part 80 is dispensed from the probe to the tip 325 of the weld pin 320, the part 80 is positioned on the weld pin or part receiving fixture 320. Specifically, the pin or fixture 320 may extend through the workpiece 90 and the part 80, in order to locate and position the part 80 relative to the workpiece 90 and lower table 310. Depending on embodiment, the part 80 can also be positioned in contact with the workpiece 90; e.g., for a welding operation or other machine process.

FIG. 10C is a schematic side view of the part 80 positioned between a weld pin 320 and a weld electrode 400. As shown in FIG. 10C, the weld electrode 400 contacts the part 80, forming an electrical circuit for welding the part 80 to the workpiece 90. In projection welding applications, for example, the part 80 may take the form of a nut or similar mechanical component, with one or more projections adapted to form the weld attachment to the workpiece 90. Alternatively, more general resistance spot welding techniques are also contemplated, as well as riveting, soldering, and other machine processes for mechanical attachment of the part 80 and workpiece 90.

In welding applications, the electrode 400 can be operably coupled to a power source configured to pass electrical current from the electrode 400 to the weld table 310 via the part 80; e.g., for resistance welding of the part 80 to the workpiece 90. The welding table 310 can also be disposed in electrical contact with the workpiece 90 and part 80, so that the current passes through the projections on the part 80 and into the workpiece 90, to provide suitable resistive heating for forming a weld connection. In some of embodiments, the electrode 400 is moveable to engage the part 80 about the weld pin 320, and to compress the part 80 and workpiece 90 together between the lower table 310 and electrode 400. Alternatively, a mechanical attachment such as riveting can be employed to fix part 80 to workpiece 90, or another machine process can be used.

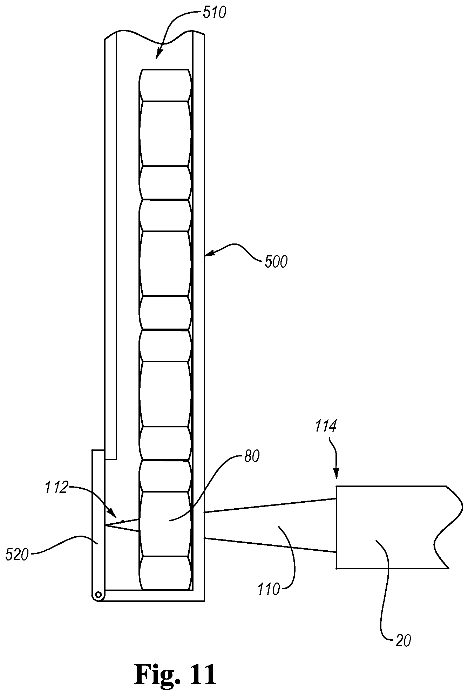

FIG. 11 is a schematic illustration of a part loader 500 for use with the part placement system. For example, the part loader 500 can include a magazine 510 formed as a channel or chute, which is sized and configured to accept a plurality of parts 80 for loading onto the part placement probe 110. In some embodiments, the magazine 510 is sized and configured to position and orient a number of weld nuts or other parts 80. Specifically, the parts 80 can be positioned in the magazine 510 so that the probe tip 112 extends through the central opening in a selected part 80, when positioned in axial alignment with the probe 110.

As shown in FIG. 11, the probe tip 112 can enter the magazine 510 through the opening in part 80 when positioned in axial alignment with the probe 110 (e.g., at the bottom of the magazine 510). The controller can then operate the actuator (e.g., by rotation of the actuator motor) in order to advance the output rod 20 toward the welding table or other machine fixture. As the output rod 20 and probe 110 advance, the probe tip 112 enters the opening of the part 80 to engage the part 80 along the body of the probe 110.

In some embodiments, the part loader 500 includes a trap-door access 520 adapted to retain the parts 80 in the magazine 510, until selected for placement. For example, the access door 520 can be biased (e.g., spring-loaded) toward the closed position, as shown in FIG. 11. As the output rod 20 and probe 110 advance toward the part engagement position, the probe tip 112 contacts the access door 520, opening door 520 as the part 80 is engaged onto the main body of the probe 110. As the output rod 20 drives the probe 110 forward, the part 80 seats against the shoulder 114 of the probe 110, adjacent the output rod 20, and exits the magazine 510 via access door 520. The part 80 then advances from the part loader 500 toward the machine fixture while engaged on the probe 110.

The controller also operates the actuator to retract the output rod 20 toward the first position, for the probe 110 to engage and secure additional parts 80. For example, the controller may control the motor current supplied to the actuator motor to rotate the motor in a direction opposite the direction of rotation for advancing the output rod 20 toward the locating fixture (e.g., in either a clockwise or counterclockwise direction). As the probe 110 is retrieved into the part loader 500, the access door 520 can close to prevent any of the parts 80 from falling out of the magazine 510.

The engagement position of the output rod 20 can also be recalibrated and adjusted; e.g., based on the change in the motor current as the probe tip 112 contacts the access door 520, and as the probe 110 engages the part 80. This provides for further modulation of the acceleration of the output rod 20 during the part placement cycle, for example to limit the speed of the output rod 20 during engagement with the part 80 in the magazine 510, and then increasing the acceleration as the output rod 20 advances from the part loader 500 toward the machine fixture.

These operations can also be performed in a loop or continuous cycle, in order position a plurality of parts 80 relative to one or more workpieces, and to weld or mechanically fasten the parts thereto. In contrast to traditional pneumatic actuator designs, the modulated acceleration can be coded into the control cycle software or firmware, so that operations are more resistant to change based on environmental conditions (e.g., due to changes in temperature or pneumatic pressure), or due to unauthorized attempts to modify the system cycle.

### METHODS OF OPERATION

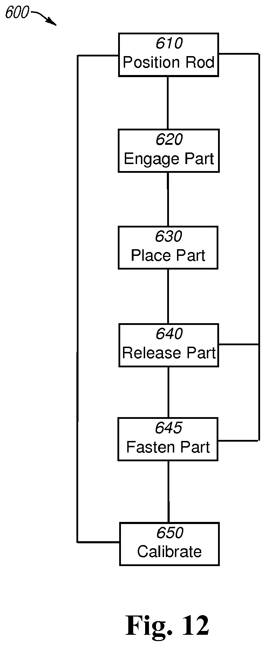

FIG. 12 is a block diagram of a method 600 for part placement. As shown in FIG. 12, method 600 may include one or more steps of positioning an output rod (step 610), e.g., using a linear actuator; engaging a part (step 620), e.g., with a part placement tool or probe disposed on the end of the output rod; and positioning the part (step 630), e.g., on a locating fixture for resistance welding, or other machining process. Depending on application, method 600 can also include releasing the part (step 640), e.g., onto a weld pin or similar locating structure adapted for attaching the part to a workpiece (step 645). More generally, the steps can be performed in any order or combination; for example, the part may be released (step 640) either before or after the part is attached (step 645).

Method 600 can also include one or more steps of calibrating the part engagement position, and the part placement and release positions (step 650). Calibration can be performed, e.g., by slowly extending the output rod until the tip of the probe engages the part within a magazine, or until the probe contacts the locating fixture, and then determining the engagement or placement position based on the probe location. The engagement and placement positions can also be adjusted to accommodate the part size and to maintain a selected spacing, as described above.

In some embodiments, calibration (step 650) is performed periodically, in order to accommodate wear on the locating fixture or probe, so that part engagement and placement accuracy can be maintained over an extended service lifetime. For example, calibration (step 650) may be performed on a periodic schedule; e.g., every two hours, every four hours, every six or eight hours, every twelve hours, or on a daily, two-day, three-day, or weekly or monthly schedule, or at a selected period therebetween. Alternatively, calibration (step 650) can be performed after a number of part placement cycles, for example 10 cycles, 100 cycles, 1,000 cycles, 5,000 cycles, 10,000 cycles, or more, or at a suitable number of cycles therebetween.

Suitable methods 600 for placing parts can thus include one or more steps of: positioning a part placement tool with respect to a part (step 610), e.g., with the placement tool or probe disposed on the output rod of a linear actuator; engaging the part with the probe (step 620), e.g., with the output rod in a first (part engagement) position; and placing the part with respect to a locating fixture (step 630), e.g., with the output rod in a second (part placement) position. Depending on application, method 600 may also include releasing the part for engaging with the locating fixture (step 640), and attaching the part (step 645), e.g., by resistance welding or another machine process.

The end placement or part release position can be determined by a controller operably coupled with the linear actuator; e.g., with the controller adapted for the linear actuator to drive the output rod between the first and second positions for engagement and placement of the part with respect to a locating fixture. The part placement tool or probe can be spaced from the locating fixture with the output rod in the second position, or the probe can approximately abut the locating fixture; e.g., at the tip of the weld pin. The controller can be configured to determine the end position of the output rod responsive to the calibration process (step 650); e.g., by carefully contacting the locating fixture with the probe, and sensing the change in the motor current when the contact occurs.

Determining the second position can comprise the controller operating the linear actuator to contact the placement fixture with a tip of the locating fixture, absent the part. Thus, the second position calibration can be an independent operational step, performed iteratively and periodically, separate from placing the part. The controller can determine a change in the motor current provided to the linear actuator, with the placement fixture contacting the tip of the locating fixture, where the second position is determined responsive to the change in the motor current. A similar process can be used to calibrate the engagement position; e.g., by sensing a change in the motor current when the probe engages the part in a part loader or magazine.

The controller can also change the first and second positions of the output rod responsive to the change in the motor current; e.g., where the change in the motor current is responsive to a change in geometry of the tip of the locating fixture or the probe. For example, after repeated part placement cycles, the tip of the weld pin or other placement fixture may be worn by contact with the inner threaded section of a welding nut type part, changing the length, width, or other geometry of the locating fixture. Changes in geometry can also be accommodated when replacing the weld pin, by an additional automated calibration process.

Similar effects can also occur on the placement fixture. The first "engagement" position and the second "release" position of the output rod can thus be recalibrated in response to changes in geometry of either the locating fixture or the probe, so that the part is accurately and consistently engaged and placed over many operational cycles, without dropping or misplacing parts due to an unexpected or undetermined gap between the placement fixture and the locating fixture.

In some examples, the part placement method is performed iteratively to place a number of parts with respect to the locating fixture, for example over many hours, days, weeks, or months of operation. In these embodiments, the method may include the controller changing the second position responsive to operating the linear actuator to iteratively contact the placement fixture with the locating fixture, absent the part. Thus the calibration or recalibration can take place independently of the part placement function, at predetermined time intervals, after a predetermined number of part placement cycles, or as needed based on user input (e.g., when either the probe or the locating fixture is replaced).

Where the output rod has a first end coupled to a piston member and a second end coupled to the placement fixture, opposite the first end, the method can further comprise driving the piston member in reciprocal motion along a longitudinal axis of the linear actuator to move the output rod between the first and second positions, for engagement and placement of the part with respect to the locating fixture. For example, a belt drive can be coupled to an electric motor, and adapted to reciprocate the piston member along the longitudinal axis of the linear actuator, with the output rod coupled to the piston member.

Suitable methods can also include accelerating the output rod from the first position to a transition region defined between the first position and the second position, and reducing the acceleration of the output rod from the transition region to the second position for releasing the part onto the locating fixture. The weld pin or other locating fixture can comprise a projection, tab, datum, indent, hole, channel, or other structural feature, for example a weld pin or other placement fixture for a welding electrode. In these embodiments, the method can include disposing the part on the positioning pin, and welding the part to a workpiece adjacent thereto.

### SYSTEM AND APPARATUS EXAMPLES

A suitable part placement system can comprise one or more of: a linear actuator operably coupled to an output rod; e.g., with the linear actuator adapted to drive the output rod between a first position and a second position; a part placement tool or probe on an end of the output rod; e.g., with the probe adapted to engage the part at the first position of the output rod and to place the part with respect to a locating fixture at the second position of the output rod; and a controller operably coupled with the linear actuator; e.g., with the controller adapted for the linear actuator to drive the output rod between the first and second positions for engagement of the part with the locating fixture. The controller can also be configured to determine the second position of the output rod responsive to contacting the locating fixture with the probe.

In some examples, the linear actuator comprises an actuator housing having a longitudinal axis; a piston member disposed within the actuator housing along the longitudinal axis; and a drive belt coupled to the piston member, with the drive belt configured to drive the piston member in reciprocal motion along the longitudinal axis. For example, the output rod may have a first end coupled to the piston member and second end opposite the first end; e.g., with the second end coupled to the probe for selective positioning outside the actuator housing, in response to the reciprocal motion of the piston member within the actuator housing. A rotatable shaft can be operably connected to an electric motor and the drive belt, e.g. where rotation of the shaft in a first direction drives the rod from the first position toward the second position and rotation of the shaft in a second direction opposite the first direction drives the rod from part second position toward the first position.

Depending on application, the controller can be configured to determine the second position by directing the linear actuator to move the output rod to contact the weld pin or other locating fixture with a tip of the probe, and then to where the tip of the probe is selectively spaced from the locating fixture with the output rod in the second position, for release of the part onto the locating fixture. The controller can be configured to determine a contact position of the output rod based on a change in a motor current provided to the linear actuator with the probe contacting the locating fixture, and the controller can be further configured to change the second position responsive to a change in the contact position of the output rod; e.g., with the change in contact position responsive to a change in geometry of the locating fixture.

The controller can also be configured to determine the change in contact position by iterative contact of the probe with the locating fixture, absent the part. In these examples the second (part placement or release) position of the output rod can be recalibrated to account for wear or other changes in the geometry of the locating fixture or placement fixture (or both), independently of the part placement cycle. The contact can be repeated with the output rod moving substantially more slowly than during a part placement cycle; e.g., over a period of a few seconds or more, in order to determine an average or best-fit part placement position for the output rod, with the probe adjacent to but not necessarily contacting the weld pin (or other positioning feature).

In some embodiments, the controller is configured for the linear actuator to accelerate the output rod from the first position to a transition region defined between the first position and the second position, and to reduce the acceleration of the output rod from the transition region to the second position for releasing the part onto the locating fixture. For example, the probe may comprise a tapered portion adapted to engage the part by entering an opening therein, with the output rod in the first position, and the locating fixture may comprise a locating post or pin member having a tip section adapted to engage the same opening in the part, when the part is released from the placement fixture with the output rod in the second position. A magazine can be configured to provide a plurality of such parts for sequential engagement with the placement fixture and the locating fixture, respectively, in response to reciprocal motion of the output rod between the first and second positions.

A suitable part placement apparatus can comprise one or more of: a linear actuator operably coupled to an output rod at a first end thereof; e.g., with the linear actuator comprising a piston member disposed within an actuator housing and a drive belt coupled to the piston member, the drive belt configured to drive the piston member in reciprocal motion along a longitudinal axis of the actuator housing; and a part placement tool or probe member on a second end of the output rod, opposite the piston member coupled to the first end; e.g., with the probe adapted to engage a part at the first position of the output rod and to place the part with respect to a locating fixture at the second position of the output rod.

A controller can be operably coupled with the linear actuator; e.g., with the controller adapted for the linear actuator to drive the output rod between the first and second positions for engagement of the part with the locating fixture. The controller can also be configured to determine the second position of the output rod responsive to contacting the locating fixture with the probe, absent the part and independent of the part placement cycle.

The locating fixture may comprise a weld pin for a welding electrode. The apparatus can further comprise a magazine configured to provide a plurality of parts for sequential engagement with the part placement tool and the weld pin, respectively, in response to reciprocal motion of the output rod between the first and second positions.

In any of these examples, the actuator can include an actuator housing having a longitudinal axis; a piston member disposed within the actuator housing along the longitudinal axis; a drive belt coupled to the piston member, the drive belt configured to drive the piston member in reciprocal motion along the longitudinal axis; and an output rod having a first end coupled to the piston member and second end opposite the first end. The second end of the output rod can be selectively positionable outside the actuator housing; e.g., in response to the reciprocal motion of the piston member within the actuator housing.

The drive belt can be coupled to a drive pulley in a back end of the actuator housing and an idler pulley in a front end of the actuator housing, the idler pulley disposed opposite the drive pulley along the longitudinal axis. A yoke can be configured with at least one arm to rotationally support the idler pulley, where the yoke is selectively positionable along the longitudinal axis of the actuator housing to tension the drive belt between the drive pulley and the idler pulley. For example, the yoke can comprise a front plate selectively positionable with respect to the front end of the actuator housing and two arms extending along the longitudinal axis to rotationally support the idler pulley therebetween.

An electric motor can be rotationally coupled to the drive pulley; e.g., with a motor controller configured for selective rotation of the electric motor; and where the second end of the output rod is positioned outside the actuator housing in response to the selective rotation. In various embodiments, the electric motor comprises a stepper motor, a DC motor or an electric servomotor transversely mounted to the actuator housing in the back end thereof; e.g., where the electric motor, the drive pulley and the idler pulley each has a rotational axis disposed generally transverse to the longitudinal axis of the actuator housing.

The output rod can be disposed off-axis within the actuator housing, generally parallel to and spaced from the drive belt along the longitudinal axis. The drive belt can comprise a plurality of projecting teeth configured for engagement with the drive pulley, with a clamp attachment configured to attach the piston member about the drive belt by engagement with one or more of the teeth. The piston member can be disposed about the drive belt along the longitudinal axis of the actuator housing, and configured in reciprocal engagement with an inner surface thereof.

Depending on application, the actuator housing can comprise a cylinder or cylinder bore having a substantially circular cross section, with the piston member disposed about the longitudinal axis thereof. One or more wear members or rings can be disposed in sliding engagement between the piston member and an inner surface of the actuator housing; e.g., with a bushing disposed in sliding engagement about the distal end of the output rod in the front end of the actuator housing.

Other suitable linear actuator systems can be provided, comprising: a housing having a longitudinal axis; a drive member in reciprocal engagement within the housing and disposed along the longitudinal axis thereof; an output rod having a first end coupled to the drive member within the housing and a second end positionable exterior to the housing, opposite the first end; and a belt drive configured to selectively position the drive member within the housing along the longitudinal axis; e.g., where the belt drive is disposed within the housing and coupled to the drive member so that the second end of the output rod is selectively positioned exterior to the housing. For example, the belt drive can comprise a timing belt coupled to the drive member between a drive pulley and an idler disposed within the housing along the longitudinal axis, with a motor rotationally coupled to the drive pulley and configured to selectively position the drive member along the longitudinal axis by rotation thereof, and where the motor is rotationally coupled to the drive pulley along a motor axis substantially transverse to the longitudinal axis of the housing.

The drive member can comprise a piston member coupled to an upper or lower portion of the belt drive and disposed in reciprocal engagement with an interior surface of the housing, e.g. where the piston member is disposed about the belt drive along the longitudinal axis of the housing. The output rod can be generally parallel to and offset from the belt drive with respect to the longitudinal axis of the housing, with a bushing disposed about the output rod in sliding engagement proximate the second end.

Suitable methods of operating a linear actuator include one or more steps of: supporting an output rod in sliding engagement within an actuator housing, where the output rod comprises a first end attached to a drive member and a second end selectively positionable exterior to the actuator housing, opposite the first end; positioning the drive member in reciprocal motion within the actuator housing, along a longitudinal axis thereof; and selectively controlling the reciprocal motion of the drive member with a belt drive system comprising a timing belt disposed between a drive pulley and an idler along the longitudinal axis within the housing.

The drive member can be coupled to the timing belt between the drive pulley and the idler so that the second end of the output rod is selectively positioned based on a rotational position of the drive pulley. For example, the drive member can comprise a piston disposed about the timing belt and coupled to an upper or lower portion thereof, in combination with one or both of: positioning the piston in reciprocal sliding engagement with an inner surface of the actuator housing; and supporting the output rod in sliding engagement proximate the second end, parallel to and offset from the longitudinal axis of the actuator housing.

Depending on application, the method can include selectively positioning the second end of the output rod outside the actuator housing based on a rotational position of an electric motor rotationally coupled to the drive pulley along a motor axis substantially transverse to the longitudinal axis of the housing. The timing belt itself can comprise a plurality of inwardly or outwardly-projecting teeth configured for engagement with complementary features on a belt clamp mechanically fastened to or within a body of a coupling member for attaching a top or upper portion of the drive belt to an inner surface of the piston.

A sliding engagement can be provided between the piston and the inner surface of the actuator housing; e.g., with a wear ring or sliding engagement member disposed between an outer radius or outer surface of the drive member and the inner surface of the actuator housing. Suitable materials for the wear ring or sliding engagement member include a durable polymer, metal, or composite material.

The output rod can be coupled to the drive belt via the piston member by seating the first end into an axial cavity in the piston member using a mechanical coupling. The output rod can be disposed above the drive belt; e.g., with a longitudinal axis of the output rod between an inner surface of the actuator housing and a top portion of the drive belt, opposite a bottom portion of the drive belt. The output rod can be coupled to the belt drive via the piston member disposed above the belt drive; e.g., with a longitudinal axis of the output rod between an inner surface of the actuator housing and the upper portion of the belt drive, opposite the lower portion of the belt drive.

## Claims

1. A part placement system (100) comprising:
a linear actuator (10) operably coupled to an output rod (20), the linear actuator (10) adapted to drive the output rod (20) between a first position and a second position;
the part placement tool comprising a probe (110) on an end of the output rod (20), the probe (110) adapted to engage a part at the first position of the output rod (20) and to place the part with respect to a locating fixture (320) at the second position of the output rod (20); and
a controller (200) operably coupled with the linear actuator (10), the controller (200) adapted for the linear actuator (10) to modulate acceleration of the output rod (20) between engagement of the part in the first position and placement of the part in the second position;
wherein the controller (200) is configured to determine the second position of the output rod (20) responsive to contacting the locating fixture (320) with the probe (110) based on a selected spacing from a probe stop position with the tip of the probe contacting the locating fixture (320); and wherein the tip of the probe (110) has the selected spacing from the locating fixture with the output rod (20) in the second position, the spacing selected for releasing the part from the probe (110) and engaging the part with the locating fixture; and
wherein the controller (200) is configured to determine the probe stop position based on a change in a motor current provided to the linear actuator with the tip of the probe (110) contacting the locating fixture (320), the controller further configured to adjust the second position responsive to a change in the probe stop position, wherein the change is responsive to change in geometry of the locating fixture.

2. The system of claim 1, wherein the linear actuator (10) comprises:
an actuator housing (14) having a longitudinal axis;
a piston member (30) disposed within the actuator housing (14) along the longitudinal axis; and
a drive belt (24) coupled to the piston member (30), the drive belt (24) configured to drive the piston member (30) in reciprocal motion along the longitudinal axis;
wherein the output rod (20) has a first end coupled to the piston member (30) and a second end opposite the first end, the second end coupled to the probe (110) for selective positioning outside the actuator housing (14), in response to the reciprocal motion of the piston member (30) within the actuator housing (14).

3. The system of claim 2, further comprising an electric motor (12) having a rotatable shaft operably connected to the drive belt (24), wherein rotation of the shaft in first and second opposing directions drives the output rod (20) in reciprocating motion from the first position toward the second position and from second position toward the first position, respectively.

4. The system of any one of the preceding claims, wherein the controller (200) is adapted to regulate the motor current provided to an electric motor (12) to accelerate the output rod (20) from the first position to a transition region defined between the first position and the second position, and to change the acceleration of the output rod (20) in the transition region for releasing the part from the probe (110) with the output rod (20) in the second position.

5. The system of any one of the preceding claims, wherein the probe (110) comprises a tapered tip portion adapted to engage an opening in the part with the output rod (20) in the first position, and the locating fixture (320) comprises a pin member adapted to engage the opening when the part is released from the probe (110) with the output rod (20) in the second position.

6. The system of claim 5, further comprising a magazine (510) configured to provide a plurality of parts for sequential engagement of the parts with the probe (110) and the locating fixture (320), respectively, in response to reciprocal motion of the output rod (20) between the first and second positions.

7. The system of any one of the preceding claims, wherein the controller (200) is configured to determine the probe stop position by iterative contact of the probe (110) with the locating fixture (320), absent the part.

8. A method for placing parts, the method comprising:
positioning a probe (110) with respect to a part, the probe disposed on an output rod (20) of a linear actuator (10), wherein the linear actuator is operably coupled to the output rod (20) and adapted to drive the output rod between a first position and second position;
engaging the part with the probe, wherein the output rod has a first position;
placing the part with a part placement tool comprising the probe (110) on the end of the output rod (20), the probe adapted to engage the part at the first position of the output rod and to place the part with respect to a locating fixture (320) at a second position of the output rod, wherein the output rod has the second position with the probe selectively spaced from a locating fixture;
modulating an acceleration of the output rod with a controller (200) operably coupled with the linear actuator (10), the controller adapted for the linear actuator (10) to modulate the acceleration of the output rod (20) between engagement of the part in the first position and placement of the part in the second position, wherein the part is released from the probe (110) to engage with the locating fixture (320); and
determining a probe stop position of the output rod with the probe contacting the locating fixture (320), wherein the controller (200) is configured to determine the second position of the output rod (20) responsive to contacting the locating fixture (320) with the probe (110) based on a selected spacing from a probe stop position with the tip of the probe contacting the locating fixture (320), and wherein the tip of the probe (110) has the selected spacing from the locating fixture (320) with the output rod (20) in the second position, the spacing selected for releasing the part from the probe (110) and engaging the part with the locating fixture (320), wherein the second position of the output rod is selectively spaced from the probe stop position for engaging the part with the locating fixture;
wherein the controller (200) is configured to determine the probe stop position based on a change in a motor current provided to the linear actuator with the tip of the probe (110) contacting the locating fixture (320), the controller further configured to adjust the second position responsive to a change in the probe stop position, wherein the change is responsive to change in geometry of the locating fixture.

9. The method of claim 8, further comprising determining the probe stop position of the output rod (20) iteratively, absent the part engaged with the probe (110).

10. The method of claim 8 or 9, further comprising performing the method iteratively to place a number of parts with respect to the locating fixture (320), and further comprising modifying the second position of the output rod (20) responsive to operating the linear actuator (10) to iteratively contact the probe (110) with the locating fixture (320), absent the parts.

11. The method of any one of the claims 8 to 10, wherein the output rod (20) has a first end coupled to a piston member (30) and a second end coupled to the probe (110), the second end opposite the first end, and further comprising driving the piston member (30) in reciprocal motion along a longitudinal axis of the linear actuator (10) to place a plurality of parts on the locating fixture (320) by sequentially moving the output rod between the first and second positions.

12. The method of claim 11, further comprising providing the motor current to an electric motor (12) operatively coupled to the piston member (30) via a drive belt (24), and modifying the second position of the output rod (20) responsive to changes in the motor current with the probe (110) contacting the locating fixture (320), wherein the second position is responsive to wear on the locating fixture to maintain a selected spacing of the probe from the locating fixture for engaging the parts therewith.

13. The method of claim 11 or 12, further comprising accelerating the output rod (20) from the first position to a transition region defined between the first position and the second position, and reducing the acceleration of the output rod from the transition region to the second position for releasing the part onto the locating fixture (320).

14. The method of claim 13, wherein the part comprises a weld nut and the locating fixture (320) comprises a weld pin for a welding electrode, and further comprising disposing the weld nut on the weld pin and welding the weld nut to a workpiece adjacent thereto.

15. The method of claim 14, further comprising driving the output rod (20) to the probe stop position with the probe (110) contacting the weld pin, wherein the second position of the output rod is responsive to the probe stop position to maintain a selected spacing between the probe and the weld pin for engaging the part therewith.

## Patentansprüche

1. Teileplatzierungssystem (100), umfassend:
einen Linear-Aktuator (10), der an eine Ausgangsstange (20) wirkgekoppelt ist, wobei der Linear-Aktuator (10) dazu ausgeführt ist, die Ausgangsstange (20) zwischen einer ersten Position und einer zweiten Position zu treiben,
das Teileplatzierungswerkzeug, das an einem Ende der Ausgangsstange (20) eine Sonde (110) umfasst, wobei die Sonde (110) dazu ausgeführt ist, ein Teil an der ersten Position der Ausgangsstange (20) in Eingriff zu nehmen und das Teil bezüglich einer Positionierhalterung (320) an der zweiten Position der Ausgangsstange (20) zu platzieren, und
eine Steuerung (200), die mit dem Linear-Aktuator (10) wirkgekoppelt ist, wobei die Steuerung (200) dazu ausgeführt ist, dass der Linear-Aktuator (10) die Beschleunigung der Ausgangsstange (20) zwischen Ineingriffnahme des Teils in der ersten Position und Platzierung des Teils in der zweiten Position zu modulieren,
wobei die Steuerung (200) dazu ausgestaltet ist, die zweite Position der Ausgangsstange (20) als Reaktion auf das Kontaktieren der Positionierhalterung (320) mit der Sonde (110) auf der Grundlage eines gewählten Abstands von einer Sondenanschlagposition, wobei die Spitze der Sonde die Positionierhalterung (320) kontaktiert, zu bestimmen,
und wobei die Spitze der Sonde (110) den gewählten Abstand von der Positionierhalterung hat mit der Ausgangsstange (20) in der zweiten Position, wobei der Abstand zur Freigabe des Teils von der Sonde (110) und zum Ineingriffbringen des Teils mit der Positionierhalterung gewählt ist, und
wobei die Steuerung (200) dazu ausgestaltet ist, die Sondenanschlagposition auf der Grundlage einer Änderung eines dem Linear-Aktuator bereitgestellten Motorstroms zu bestimmen, wobei die Spitze der Sonde (110) die Positionierhalterung (320) kontaktiert#, wobei die Steuerung ferner dazu ausgestaltet ist, die zweite Position als Reaktion auf eine Änderung der Sondenanschlagposition zu verstellen, wobei die Änderung auf die Änderung der Geometrie der Positionierhalterung reagiert.

2. System nach Anspruch 1, wobei der Linear-Aktuator (10) Folgendes umfasst:
ein Aktuatorgehäuse (14) mit einer Längsachse,
ein Kolbenglied (30), das in dem Aktuatorgehäuse (14) entlang der Längsachse angeordnet ist, und einen Antriebsriemen (24), der an das Kolbenglied (30) gekoppelt ist, wobei der Antriebsriemen (24) dazu ausgestaltet ist, das Kolbenglied (30) in Hin- und Herbewegung entlang der Längsachse anzutreiben,
wobei die Ausgangsstange (20) ein erstes Ende hat, das an das Kolbenglied (30) gekoppelt ist, sowie ein dem ersten Ende gegenüberliegendes zweites Ende, wobei das zweite Ende an die Sonde (110) gekoppelt ist zur gezielten Positionierung außerhalb des Aktuatorgehäuses (14) als Reaktion auf die Hin- und Herbewegung des Kolbenglieds (30) in dem Aktuatorgehäuse (14).

3. System nach Anspruch 2, ferner umfassend einen Elektromotor (12) mit einer drehbaren Welle, die mit dem Antriebsriemen (24) wirkgekoppelt ist, wobei die Ausgangsstange (20) durch Drehen der Welle in eine erste und eine entgegengesetzte zweite Richtung in Hin- und Herbewegung aus der ersten Position zu der zweiten Position hin bzw. aus der zweiten Position zu der ersten Position hin angetrieben wird.

4. System nach einem der vorhergehenden Ansprüche, wobei die Steuerung (200) dazu ausgeführt ist, den einem Elektromotor (12) bereitgestellten Motorstrom zu regulieren, um die Ausgangsstange (20) von der ersten Position zu einem zwischen der ersten Position und der zweiten Position definierten Übergangsbereich zu beschleunigen und um die Beschleunigung der Ausgangsstange (20) in dem Übergangsbereich zu ändern, um das Teil aus der Sonde (110) freizugeben, wobei die Ausgangsstange (20) in der zweiten Position ist.

5. System nach einem der vorhergehenden Ansprüche, wobei die Sonde (110) einen sich verjüngenden Spitzenabschnitt umfasst, der dazu ausgestaltet ist, eine Öffnung in dem Teil in Eingriff zu nehmen, wobei die Ausgangsstange (20) in der ersten Position ist, und die Positionierhalterung (320) ein Stiftglied umfasst, das dazu ausgeführt ist, die Öffnung in Eingriff zu nehmen, wenn das Teil von der Sonde (110) freigegeben worden ist, wobei die Ausgangsstange (20) in der zweiten Position ist.

6. System nach Anspruch 5, ferner umfassend ein Magazin (510), das dazu ausgestaltet ist, eine Vielzahl von Teilen bereitzustellen, um die Teile sequenziell mit der Sonde (110) bzw. der Positionierhalterung (320) als Reaktion auf eine Hin- und Herbewegung der Ausgangsstange (20) zwischen der ersten und der zweiten Position in Eingriff zu bringen.

7. System nach einem der vorhergehenden Ansprüche, wobei die Steuerung (200) dazu ausgestaltet ist, die Sondenanschlagposition durch iterativen Kontakt der Sonde (110) mit der Positionierhalterung (320) zu bestimmen, wenn das Teil nicht vorliegt.

8. Verfahren zum Platzieren von Teilen, wobei das Verfahren Folgendes umfasst:
Positionieren einer Sonde (110) bezüglich eines Teils, wobei die Sonde an einer Ausgangsstange (20) eines Linear-Aktuators (10) angeordnet ist, wobei der Linear-Aktuator an die Ausgangsstange (20) wirkgekoppelt und dazu ausgeführt ist, die Ausgangsstange zwischen einer ersten Position und einer zweiten Position anzutreiben,
Ineingriffbringen des Teils mit der Sonde, wobei die Ausgangsstange eine erste Position hat,
Platzieren des Teils mit einem Teileplatzierungswerkzeug, das die Sonde (110) an dem Ende der Ausgangsstange (20) umfasst, wobei die Sonde dazu ausgeführt ist, das Teil in der ersten Position der Ausgangsstange in Eingriff zu nehmen und das Teil bezüglich einer Positionierhalterung (320) in einer zweiten Position der Ausgangsstange zu platzieren, wobei die Ausgangsstange die zweite Position hat, wobei die Sonde gezielt von einer Positionierhalterung beabstandet ist,
Modulieren einer Beschleunigung der Ausgangsstange mit einer mit dem Linear-Aktuator (10) wirkgekoppelten Steuerung (200), wobei die Steuerung dazu ausgeführt ist, dass der Linear-Aktuator (10) die Beschleunigung der Ausgangsstange (20) zwischen Ineingriffnahme des Teils in der ersten Position und Platzierung des Teils in der zweiten Position zu modulieren, wobei das Teil von der Sonde (110) freigegeben wird, um mit der Positionierhalterung (320) in Eingriff zu gelangen, und
Bestimmen einer Sondenanschlagposition der Ausgangsstange, wobei die Sonde die Positionierhalterung (320) kontaktiert, wobei die Steuerung (200) dazu ausgestaltet ist, die zweite Position der Ausgangsstange (20) als Reaktion auf das Kontaktieren der Positionierhalterung (320) mit der Sonde (110) auf der Grundlage eines gewählten Abstands von einer Sondenanschlagposition, wobei die Spitze der Sonde die Positionierhalterung (320) kontaktiert, zu bestimmen und wobei die Spitze der Sonde (110) den gewählten Abstand von der Positionierhalterung (320) hat mit der Ausgangsstange (20) in der zweiten Position, wobei der Abstand zur Freigabe des Teils von der Sonde (110) und zum Ineingriffbringen des Teils mit der Positionierhalterung (320) gewählt ist, wobei die zweite Position der Ausgangsstange gezielt von der Sondenanschlagposition beabstandet ist, um das Teil mit der Positionierhalterung in Eingriff zu bringen, wobei die Steuerung (200) dazu ausgestaltet ist, die Sondenanschlagposition auf der Grundlage einer Änderung eines dem Linear-Aktuator bereitgestellten Motorstroms zu bestimmen, wobei die Spitze der Sonde (110) die Positionierhalterung (320) kontaktiert, wobei die Steuerung ferner dazu ausgestaltet ist, die zweite Position als Reaktion auf eine Änderung der Sondenanschlagposition zu verstellen, wobei die Änderung auf die Änderung der Geometrie der Positionierhalterung reagiert.

9. Verfahren nach Anspruch 8, ferner umfassend iteratives Bestimmen der Sondenanschlagposition der Ausgangsstange (20), ohne das mit der Sonde (110) in Eingriff stehende Teil.

10. Verfahren nach Anspruch 8 oder 9, ferner umfassend iteratives Durchführen des Verfahrens, um eine Anzahl von Teilen bezüglich der Positionierhalterung (320) zu platzieren, und ferner umfassend Modifizieren der zweiten Position der Ausgangsstange (20) als Reaktion auf Betätigung des Linear-Aktuators (10), um die Sonde (110) iterativ mit der Positionierhalterung (320) zu kontaktieren, wenn die Teile nicht vorliegen.

11. Verfahren nach einem der Ansprüche 8 bis 10, wobei die Ausgangsstange (20) ein erstes Ende hat, das an ein Kolbenglied (30) gekoppelt ist, sowie ein zweites Ende, das an die Sonde (110) gekoppelt ist, wobei das zweite Ende dem ersten Ende gegenüberliegt, und ferner umfassend Antreiben des Kolbenglieds (30) in einer Hin- und Herbewegung entlang einer Längsachse des Linear-Aktuators (10), um eine Vielzahl von Teilen an der Positionierhalterung (320) zu platzieren, indem die Ausgangsstange sequenziell zwischen der ersten und der zweiten Position bewegt wird.

12. Verfahren nach Anspruch 11, ferner umfassend Bereitstellen des Motorstroms für einen Elektromotor (12), der über einen Antriebsriemen (24) mit dem Kolbenglied (30) wirkgekoppelt ist, und Modifizieren der zweiten Position der Ausgangsstange (20) als Reaktion auf Änderungen des Motorstroms, wobei die Sonde (110) die Positionierhalterung (320) kontaktiert, wobei die zweite Position auf Verschleiß an der Positionierhalterung reagiert, um einen gewählten Abstand der Sonde von der Positionierhalterung zum Ineingriffbringen der Teile damit aufrechtzuerhalten.

13. Verfahren nach Anspruch 11 oder 12, ferner umfassend Beschleunigen der Ausgangsstange (20) aus der ersten Position zu einem zwischen der ersten Position und der zweiten Position definierten Übergangsbereich und Reduzieren der Beschleunigung der Ausgangsstange aus dem Übergangsbereich zu der zweiten Position, um das Teil an die Positionierhalterung (320) freizugeben.

14. Verfahren nach Anspruch 13, wobei das Teil eine Schweißmutter umfasst und die Positionierhalterung (320) einen Schweißzapfen für eine Schweißelektrode umfasst, und ferner umfassend Anordnen der Schweißmutter an dem Schweißzapfen und Schweißen der Schweißmutter an ein dazu benachbartes Werkstück.

15. Verfahren nach Anspruch 14, ferner umfassend Antreiben der Ausgangsstange (20) zu der Sondenanschlagpositin, wobei die Sonde (110) den Schweißzapfen kontaktiert, wobei die zweite Position der Ausgangsstange auf die Sondenanschlagposition reagiert, um einen gewählten Abstand zwischen der Sonde und dem Schweißzapfen zur Ineingriffnahme des Teils damit aufrechtzuerhalten.

## Revendications

1. Système de placement de pièces (100) comprenant :
un actionneur linéaire (10) accouplé de manière fonctionnelle avec une tige de sortie (20), l'actionneur linéaire (10) étant conçu pour entraîner la tige de sortie (20) entre une première position et une seconde position ;
l'outil de placement de pièces comprenant une sonde (110) à une extrémité de la tige de sortie (20), la sonde (110) étant conçue pour entrer en prise avec une pièce au niveau de la première position de la tige de sortie (20) et pour placer la pièce vis-à-vis d'un accessoire de positionnement (320) au niveau de la seconde position de la tige de sortie (20) ; et
un dispositif de commande (200) accouplé de manière fonctionnelle avec l'actionneur linéaire (10), le dispositif de commande (200) étant conçu pour que l'actionneur linéaire (10) module l'accélération de la tige de sortie (20) entre l'entrée en prise avec la pièce dans la première position et le placement de la pièce dans la seconde position ;
dans lequel le dispositif de commande (200) est configuré pour déterminer la seconde position de la tige de sortie (20) en réaction à l'entrée en contact avec l'accessoire de positionnement (320) par le biais de la sonde (110) en fonction d'un espacement sélectionné par rapport à une position d'arrêt de la sonde lorsque la pointe de la sonde est en contact avec l'accessoire de positionnement (320) ; et dans lequel la pointe de la sonde (110) a l'espacement sélectionné par rapport à l'accessoire de positionnement lorsque la tige de sortie (20) se trouve dans la seconde position, l'espacement étant sélectionné pour séparer la pièce de la sonde (110) et la mettre en prise avec l'accessoire de positionnement ; et
dans lequel le dispositif de commande (200) est configuré pour déterminer la position d'arrêt de la sonde en fonction d'un changement d'un courant de moteur fourni à l'actionneur linéaire lorsque la pointe de la sonde (110) est en contact avec l'accessoire de positionnement (320), le dispositif de commande étant en outre configuré pour ajuster la seconde position en réaction à un changement de la position d'arrêt de la sonde, le changement se produisant en réaction à un changement de géométrie de l'accessoire de positionnement.

2. Système selon la revendication 1, dans lequel l'actionneur linéaire (10) comprend :
un logement d'actionneur (14) ayant un axe longitudinal ;
un organe formant piston (30) disposé à l'intérieur du logement d'actionneur (14) le long de l'axe longitudinal ; et
une courroie d'entraînement (24) accouplée avec l'organe formant piston (30), la courroie d'entraînement (24) étant configurée pour entraîner l'organe formant piston (30) de sorte qu'il effectue un mouvement alternatif le long de l'axe longitudinal ;
dans lequel la tige de sortie (20) a une première extrémité accouplée avec l'organe formant piston (30) et une seconde extrémité opposée à la première extrémité, la seconde extrémité étant accouplée avec la sonde (110) à des fins de disposition sélective à l'extérieur du logement d'actionneur (14), en réaction au mouvement alternatif de l'organe formant piston (30) à l'intérieur du logement d'actionneur (14).

3. Système selon la revendication 2, comprenant en outre un moteur électrique (12) comportant un arbre rotatif raccordé de manière fonctionnelle à la courroie d'entraînement (24), dans lequel une rotation de l'arbre dans des première et seconde directions opposées entraîne la tige de sortie (20) de sorte qu'elle effectue un mouvement alternatif respectivement de la première position vers la seconde position et de la seconde position vers la première position.

4. Système selon l'une quelconque des revendications précédentes, dans lequel le dispositif de commande (200) est conçu pour réguler le courant de moteur fourni à un moteur électrique (12) pour accélérer la tige de sortie (20) de la première position à une région de transition définie entre la première position et la seconde position, et pour changer l'accélération de la tige de sortie (20) dans la région de transition pour séparer la pièce de la sonde (110) lorsque la tige de sortie (20) se trouve dans la seconde position.

5. Système selon l'une quelconque des revendications précédentes, dans lequel la sonde (110) comprend une partie pointe effilée conçue pour entrer en prise avec une ouverture dans la pièce lorsque la tige de sortie (20) se trouve dans la première position, et l'accessoire de positionnement (320) comprend un organe formant cheville conçu pour entrer en prise avec l'ouverture lorsque la pièce est séparée de la sonde (110) lorsque la tige de sortie (20) se trouve dans la seconde position.

6. Système selon la revendication 5, comprenant en outre un magasin (510) configuré pour fournir une pluralité de pièces en vue d'une mise en prise séquentielle des pièces respectivement avec la sonde (110) et l'accessoire de positionnement (320), en réaction au mouvement alternatif de la tige de sortie (20) entre les première et seconde positions.

7. Système selon l'une quelconque des revendications précédentes, dans lequel le dispositif de commande (200) est configuré pour déterminer la position d'arrêt de la sonde par un contact répété de la sonde (110) avec l'accessoire de positionnement (320) en l'absence de la pièce.

8. Procédé pour placer des pièces, le procédé comprenant :
disposer une sonde (110) vis-à-vis d'une pièce, la sonde étant disposée sur une tige de sortie (20) d'un actionneur linéaire (10), l'actionneur linéaire étant accouplé de manière fonctionnelle avec la tige de sortie (20) et conçu pour entraîner la tige de sortie entre une première position et une seconde position ;
mettre la pièce en prise avec la sonde, la tige de sortie se trouvant dans une première position ;
placer la pièce au moyen d'un outil de placement de pièces comprenant la sonde (110) sur l'extrémité de la tige de sortie (20), la sonde étant conçue pour entrer en prise avec la pièce au niveau de la première position de la tige de sortie et pour placer la pièce vis-à-vis d'un accessoire de positionnement (320) au niveau d'une seconde position de la tige de sortie, la tige de sortie se trouvant dans la seconde position lorsque la sonde est sélectivement espacée d'un accessoire de positionnement ;
moduler une accélération de la tige de sortie au moyen d'un dispositif de commande (200) accouplé de manière fonctionnelle avec l'actionneur linéaire (10), le dispositif de commande étant conçu pour que l'actionneur linéaire (10) module l'accélération de la tige de sortie (20) entre l'entrée en prise avec la pièce dans la première position et le placement de la pièce dans la seconde position, où la pièce est séparée de la sonde (110) pour entrer en prise avec l'accessoire de positionnement (320) ; et
déterminer une position d'arrêt de la sonde de la tige de sortie lorsque la sonde est en contact avec l'accessoire de positionnement (320), le dispositif de commande (200) étant configuré pour déterminer la seconde position de la tige de sortie (20) en réaction à l'entrée en contact avec l'accessoire de positionnement (320) par le biais de la sonde (110) en fonction d'un espacement sélectionné par rapport à une position d'arrêt de la sonde lorsque la pointe de la sonde est en contact avec l'accessoire de positionnement (320), et la pointe de la sonde (110) ayant l'espacement sélectionné par rapport à l'accessoire de positionnement (320) lorsque la tige de sortie (20) se trouve dans la seconde position, l'espacement étant sélectionné pour séparer la pièce de la sonde (110) et mettre la pièce en prise avec l'accessoire de positionnement (320), la seconde position de la tige de sortie étant sélectivement espacée de la position d'arrêt de la sonde pour mettre la pièce en prise avec l'accessoire de positionnement ; le dispositif de commande (200) étant configuré pour déterminer la position d'arrêt de la sonde en fonction d'un changement d'un courant de moteur fourni à l'actionneur linéaire lorsque la pointe de la sonde (110) est en contact avec l'accessoire de positionnement (320), le dispositif de commande étant en outre configuré pour ajuster la seconde position en réaction à un changement de la position d'arrêt de la sonde, le changement se produisant en réaction à un changement de géométrie de l'accessoire de positionnement.

9. Procédé selon la revendication 8, comprenant en outre le fait de déterminer la position d'arrêt de la sonde de la tige de sortie (20) de manière itérative, tandis que la pièce n'est pas en prise avec la sonde (110) .

10. Procédé selon la revendication 8 ou 9, comprenant en outre le fait d'exécuter le procédé de manière itérative pour placer un certain nombre de pièces vis-à-vis de l'accessoire de positionnement (320), et comprenant en outre le fait de changer la seconde position de la tige de sortie (20) en réaction à l'actionnement de l'actionneur linéaire (10) pour mettre la sonde (110) en contact avec l'accessoire de positionnement (320) de façon répétée, en l'absence des pièces.

11. Procédé selon l'une quelconque des revendications 8 à 10, dans lequel la tige de sortie (20) a une première extrémité accouplée avec un organe formant piston (30) et une seconde extrémité accouplée avec la sonde (110), la seconde extrémité étant opposée à la première extrémité, et comprenant en outre le fait d'entraîner l'organe formant piston (30) de sorte qu'il effectue un mouvement alternatif le long d'un axe longitudinal de l'actionneur linéaire (10) pour placer une pluralité de pièces sur l'accessoire de positionnement (320) en déplaçant de manière séquentielle la tige de sortie entre les première et seconde positions.

12. Procédé selon la revendication 11, comprenant en outre le fait de fournir le courant de moteur à un moteur électrique (12) accouplé de manière fonctionnelle avec l'organe formant piston (30) par le biais d'une courroie d'entraînement (24), et le fait de changer la seconde position de la tige de sortie (20) en réaction à des changements du courant de moteur lorsque la sonde (110) est en contact avec l'accessoire de positionnement (320), dans lequel la seconde position varie en fonction d'une usure au niveau de l'accessoire de positionnement pour maintenir un espacement sélectionné de la sonde par rapport à l'accessoire de positionnement pour mettre les pièces en prise avec celui-ci.

13. Procédé selon la revendication 11 ou 12, comprenant en outre le fait d'accélérer la tige de sortie (20) de la première position à une région de transition définie entre la première position et la seconde position, et le fait de réduire l'accélération de la tige de sortie de la région de transition à la seconde position pour séparer la pièce et la transférer à l'accessoire de positionnement (320).

14. Procédé selon la revendication 13, dans lequel la pièce comprend un écrou à souder et l'accessoire de positionnement (320) comprend une cheville de soudure pour une électrode de soudure, et comprenant en outre le fait de disposer l'écrou à souder sur la cheville de soudure et le fait de souder l'écrou à souder à une pièce à travailler adjacente à celui-ci.

15. Procédé selon la revendication 14, comprenant en outre le fait d'entraîner la tige de sortie (20) jusqu'à la position d'arrêt de la sonde lorsque la sonde (110) se trouve en contact avec la cheville de soudure, dans lequel la seconde position de la tige de sortie varie en fonction de la position d'arrêt de la sonde pour maintenir un espacement sélectionné entre la sonde et la cheville de soudure pour mettre la pièce en prise avec celle-ci.
